# EUROPEAN PATENT SPECIFICATION

(11) **EP 4 436 265 B1**
(45) Date of publication and mention of the grant of the patent: **22.04.2026**
(21) Application number: 22914046.2
(22) Date of filing: 05.12.2022
(51) Int. Cl.: H04W 48/18, H04W 36/00, H04L 69/14, H04L 67/00

(54) **CONTROL METHOD FOR CELLULAR NETWORK, AND ELECTRONIC DEVICE**
STEUERUNGSVERFAHREN FÜR EIN ZELLULARES NETZWERK UND ELEKTRONISCHE VORRICHTUNG
PROCÉDÉ DE CONTRÔLE DE RÉSEAU CELLULAIRE, ET DISPOSITIF ÉLECTRONIQUE

(30) Priority: 31.12.2021 CN 202111678700
(43) Date of publication of application: 25.09.2024
(73) Proprietor: Huawei Technologies Co., Ltd., Shenzhen, Guangdong 518129 (CN)
(72) Inventor: CHEN, Chong, Shenzhen, Guangdong 518129 (CN); LIN, Dawei, Shenzhen, Guangdong 518129 (CN)
(74) Representative: Pfenning, Meinig & Partner mbB
(86) International application number: PCT/CN2022/136477
(87) International publication number: WO 2023/124791

(56) References cited:
- CN-A- 102 685 927
- CN-A- 105 744 474
- CN-A- 108 696 445
- CN-A- 112 469 099
- CN-A- 113 645 345
- US-A1- 2019 373 525
- US-B1- 8 867 490

## Description

### TECHNICAL FIELD

Embodiments of this application relate to the field of terminal device technologies, and in particular, to a cellular network control method, an electronic device, a computer-readable storage medium, and a chip.

### BACKGROUND

With development of communication technologies, there are more types of applications in an electronic device. This makes the applications more closely related to life of a user. Currently, most applications need to be connected to a network to provide a service, and the electronic device may provide a Wi-Fi network and a cellular network for the applications to be connected to.

In this case, a scenario in which different applications in a mobile phone are respectively connected to the cellular network and the Wi-Fi network may cause continuous power consumption of the mobile phone.

CN 108 696 445 A discloses a flow control methods, including: when current time is in except grace period section, flow utilization rate is more than the first predetermined threshold value, flow used in the same day is more than second flow threshold value less than flow used in first flow threshold value, determines whether there is non-critical application in the application of presently described mobile terminal running background; there are the network communication connection for when non-critical application, disconnecting the non-critical application in the application of presently described mobile terminal running background, it sets the data network access state of the non-critical application to denied access state.

CN 102 685 927 A discloses a mobile communications infrastructure with coordinated data session offloading of mobile subscriber devices from a primary communication medium to a secondary communication medium. The primary communications infrastructure provides a primary communications medium for mobile subscriber devices and a secondary communications infrastructure provides a secondary communication medium that is accessible by authorized mobile subscriber devices. An offload management system is configured to control offload of mobile subscriber devices from the primary communication medium to the secondary communication medium during a data session with a data network based on an offload profile associated with the mobile subscriber device and resource status information relating to the available capacity of the secondary communication medium.

### SUMMARY

The above mentioned problems are solved by the cellular network control method the electronic device, the computer-readable storage medium, and the chip according to the claims. To resolve the foregoing technical problem, this application provides a cellular network control method and an electronic device. According to the method, when it is detected that a last application that has applied for and used a cellular network is switched from the foreground to the background for running, and does not generate application data for specific duration, a channel of the cellular network may be disconnected, to prevent an application that does not apply for the cellular network from continuing to use, when the electronic device has a Wi-Fi connection, the cellular network applied for by the foregoing application, so that power of a mobile phone can be conserved in a dual-network environment.

The invention is set out in the appended set of claims. According to a first aspect, an embodiment of this application provides a cellular network control method, and the method is applied to an electronic device. The electronic device performs data exchange with an application server through a Wi-Fi network and a cellular network. The cellular network is applied for by a first application. The first application and a second application respectively perform data exchange with an application server of the first application and an application server of the second application through the cellular network. The method includes:
in response to a received first user operation, switching the first application running in the foreground to the background for running;
detecting that the first application does not generate application data within preset duration of running in the background, and that the first application is a last application that has applied for the cellular network and used the cellular network, and disconnecting a channel of the cellular network of the electronic device; and
exchanging data of the second application with the application server of the second application through the Wi-Fi network.

For example, an application in the electronic device may perform data exchange with an application server at a same moment through a network. In this case, different applications in the electronic device may respectively perform data exchange with application servers of the different applications through the Wi-Fi network and the cellular network.

For example, the foregoing data exchange may indicate uplink data exchange, downlink data exchange, or uplink-downlink data exchange.

For example, that the first application uses the cellular network indicates that before the electronic device detects that the first application does not generate the application data within the preset duration of running in the background, the first application may perform data exchange with the application server of the first application through the cellular network.

In this embodiment of this application, in a scenario in which the electronic device performs dual-network connection through the Wi-Fi network and the cellular network, the cellular network is applied for by the first application and used by the first application and the second application that does not apply for the cellular network. After the first application running in the foreground is switched, in response to a user operation, to the background for running, it is detected that the first application does not generate the application data within the preset duration of running in the background, and is the last application that has applied for and used the cellular network. In this case, the channel of the cellular network of the electronic device may be disconnected, to prevent the second application that does not apply for the cellular network from continuing to use the cellular network applied for by the first application when the electronic device has a Wi-Fi connection, so that power of a mobile phone can be conserved in a dual-network environment.

Optionally, in a possible implementation, after the disconnecting the cellular network of the electronic device, the method further includes:
in response to a received second user operation, switching, to the foreground for running, the first application that does not generate the application data within the preset duration of running in the background; and
connecting the channel of the cellular network of the electronic device.

Optionally, the method further includes: after the connecting the channel of the cellular network of the electronic device, exchanging data of the first application with the application server of the first application through the cellular network.

For example, an occasion for exchanging the data of the first application through the cellular network is not limited in this application. A specific occasion is determined by a service requirement of the first application. When the first application needs to be connected to the network to perform data exchange with the application server, the cellular network may be used for implementation.

Optionally, in a possible implementation, after the detecting that the first application does not generate application data within preset duration of running in the background, and that the first application is a last application that has applied for the cellular network and used the cellular network, the method further includes:
deleting a first cellular request of the first application from a first data structure.

The first cellular request is used to apply for the cellular network. The first data structure is used to store a cellular request of a preset application. The preset application is an application that has applied for the cellular network.

Optionally, in a possible implementation,
before the deleting a first cellular request of the first application from a first data structure, the method further includes:
backing up the first cellular request to a second data structure.

Before the connecting the channel of the cellular network of the electronic device, the method further includes:
writing, onto the first data structure, a backup first cellular request in the second data structure.

Optionally, in a possible implementation, the method further includes:
in response to a received third user operation, switching a third application running in the foreground to the background for running, where the cellular network is applied for by the third application, and the third application performs data exchange with an application server of the third application through the cellular network; and
detecting that the third application does not generate application data within the preset duration of running in the background, and that the third application is not the last application that has applied for the cellular network and used the cellular network, and deleting a second cellular request of the third application from the first data structure.

The second cellular request is used to apply for the cellular network.

For example, when it is detected that the third application does not generate the application data within the preset duration of running in the background, there is an application, other than the third application, that has applied for the cellular network and still uses the cellular network.

Optionally, in a possible implementation, before the deleting a second cellular request of the third application from the first data structure, the method further includes:
backing up the second cellular request to a second data structure.

Optionally, in a possible implementation, after the deleting a second cellular request of the third application from the first data structure, the method further includes:
in response to a received fourth user operation, switching, to the foreground for running, the third application that does not generate the application data within the preset duration of running in the background; and
writing, onto the first data structure, a backup second cellular request in the second data structure.

Optionally, in a possible implementation, after the writing, onto the first data structure, a backup first cellular request in the second data structure, the method further includes:
deleting the first cellular request from the second data structure.

Optionally, in a possible implementation, after the writing, onto the first data structure, a backup second cellular request in the second data structure, the method further includes:
deleting the second cellular request from the second data structure.

Optionally, in a possible implementation, after the disconnecting a channel of the cellular network of the electronic device, the method further includes:
in response to a received fourth user operation, closing the first application that does not generate the application data within the preset duration of running in the background; and
deleting the first cellular request from the second data structure.

Optionally, in a possible implementation, the electronic device displays a first icon indicating the Wi-Fi network and a second icon indicating the cellular network.

Before the disconnecting a channel of the cellular network of the electronic device, the second icon includes a second uplink identifier and/or a second downlink identifier.

The second uplink identifier indicates that the electronic device uploads data to the application server through the cellular network.

The second downlink identifier indicates that the electronic device downloads data from the application server through the cellular network.

Optionally, in a possible implementation, after the disconnecting a channel of the cellular network of the electronic device, the first icon includes a first uplink identifier and/or a first downlink identifier, and the second icon does not include the second uplink identifier and the second downlink identifier.

The first uplink identifier indicates that the electronic device uploads data to the application server through the Wi-Fi network.

The first downlink identifier indicates that the electronic device downloads data from the application server through the Wi-Fi network.

Optionally, in a possible implementation, after the connecting the channel of the cellular network of the electronic device, the second icon includes the second uplink identifier and/or the second downlink identifier.

According to a second aspect, an embodiment of this application provides an electronic device. The electronic device includes: a memory and a processor. The memory is coupled to the processor. The memory stores program instructions. When the program instructions are executed by the processor, the electronic device is enabled to perform the method according to any one of the first aspect and the implementations of the first aspect.

For technical effects corresponding to the second aspect, refer to technical effects corresponding to any one of the first aspect and the implementations of the first aspect. Details are not described herein again.

According to a third aspect, an embodiment of this application provides a computer-readable medium, and the computer-readable medium is configured to store a computer program. When the computer program is run on an electronic device, the electronic device is enabled to perform the method according to any one of the first aspect and the implementations of the first aspect.

For technical effects corresponding to the third aspect, refer to technical effects corresponding to any one of the first aspect and the implementations of the first aspect. Details are not described herein again.

According to a fourth aspect, an embodiment of this application provides a chip. The chip includes one or more interface circuits and one or more processors. The interface circuit is configured to receive a signal from a memory of an electronic device, and send the signal to the processor. The signal includes computer instructions stored in the memory. When the processor executes the computer instructions, the electronic device is enabled to perform the method according to any one of the first aspect and the implementations of the first aspect.

For technical effects corresponding to the fourth aspect, refer to technical effects corresponding to any one of the first aspect and the implementations of the first aspect. Details are not described herein again.

### BRIEF DESCRIPTION OF DRAWINGS

To describe technical solutions in embodiments of this application more clearly, the following briefly describes the accompanying drawings for describing embodiments of this application. It is clear that the accompanying drawings in the following descriptions show merely some embodiments of this application, and a person of ordinary skill in the art may still derive other drawings from these accompanying drawings without creative efforts.
FIG. 1 is one of examples of schematic diagrams of structures of an electronic device;
FIG. 2 is an example of a schematic diagram of a software structure of an electronic device;
FIG. 3a is an example of a schematic diagram of network interaction of a mobile phone;
FIG. 3b is an example of a schematic flowchart of interaction between modules of a mobile phone;
FIG. 4 is an example of a schematic diagram of a cellular status and an application status;
FIG. 5a is an example of a schematic flowchart of a cellular network control method;
FIG. 5b is an example of a schematic flowchart of a cellular network control method;
FIG. 6 is an example of a schematic flowchart of a cellular network control method;
FIG. 7 is an example of a schematic flowchart of a cellular network control method;
FIG. 8 is an example of a schematic flowchart of a cellular network control method;
FIG. 9(1) to FIG. 9(4) are an example of a schematic diagram of an application scenario;
FIG. 10(1) to FIG. 10(3) are an example of a schematic diagram of an application scenario;
FIG. 11 is an example of a schematic diagram of a cellular status and an application status according to an embodiment of this application;
FIG. 12 is an example of a schematic diagram of a cellular status and an application status according to an embodiment of this application;
FIG. 13 is an example of a schematic diagram of a cellular status and an application status according to an embodiment of this application; and
FIG. 14 is a schematic diagram of a structure of an apparatus according to an embodiment of this application.

### DESCRIPTION OF EMBODIMENTS

The following clearly describes technical solutions in embodiments of this application with reference to accompanying drawings in embodiments of this application. It is clear that, the described embodiments are some but not all of the embodiments of this application. All other embodiments obtained by a person of ordinary skill in the art based on embodiments of this application without creative efforts shall fall within the protection scope of this application.

The term "and/or" in this specification describes only an association relationship for describing associated objects and indicates that three relationships may exist. For example, A and/or B may indicate the following three cases: Only A exists, both A and B exist, and only B exists.

In this specification and claims in embodiments of this application, the terms "first", "second", and the like are intended to distinguish between different objects but do not indicate a particular order of the objects. For example, a first target object, a second target object, and the like are used to distinguish between different target objects, but are not used to describe a particular order of the target objects.

In embodiments of this application, the word such as "example" or "for example" represents an example, an illustration, or a description. Any embodiment or design described by "example" or "for example" in embodiments of this application should not be construed as being more preferred or advantageous than another embodiment or design. To be precise, the word such as "example" or "for example" is intended to present a related concept in a specific manner.

In the description of embodiments of this application, unless otherwise specified, "a plurality of" means two or more. For example, a plurality of processing units mean two or more processing units, and a plurality of systems mean two or more systems.

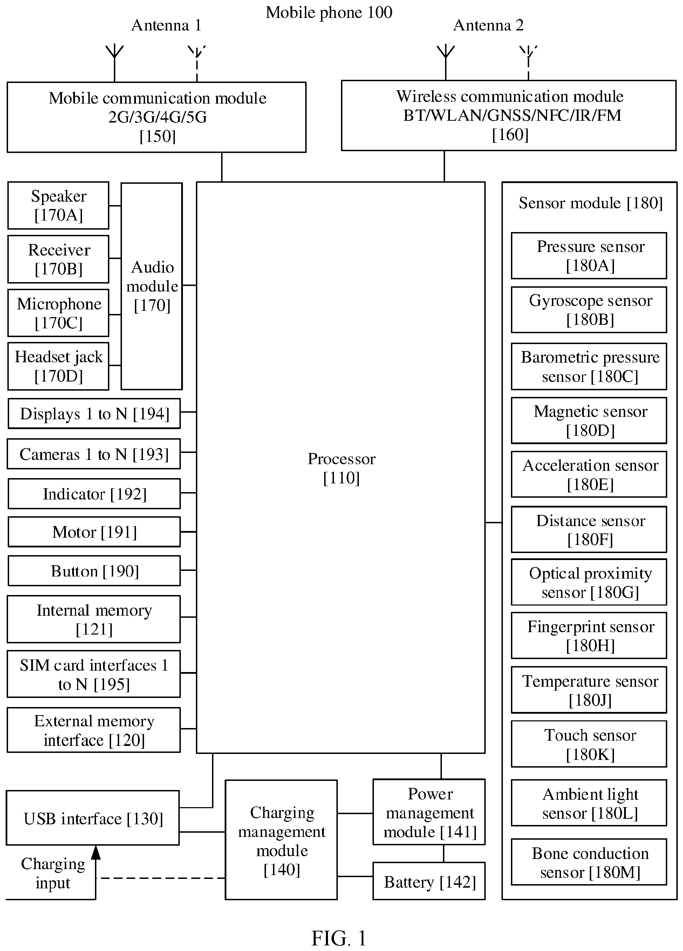

FIG. 1 is a schematic diagram of a structure of an electronic device 100. It should be understood that the electronic device 100 shown in FIG. 1 is merely an example of the electronic device. Optionally, the electronic device 100 may be a terminal, or may be referred to as a terminal device. The terminal may be a cellular phone (cellular phone), that is, a mobile phone. This is not limited in this application. It should be further noted that the electronic device 100 may have more or fewer components than those shown in the figure, two or more components may be combined, or there may be different component configurations. The various components shown in FIG. 1 may be implemented in hardware including one or more signal processing circuits and/or the functions described in embodiments of this application may be implemented by hardware, software, firmware, or any combination thereof. When being implemented by software, these functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to these specific embodiments. The specific embodiments are merely illustrative rather than restrictive. Inspired by this application, a person of ordinary skill in the art may develop many other manners without departing from the principle of this application and the protection scope of the claims, and all such manners fall within the protection scope of the claims.
wave signals. Each antenna in the electronic device 100 may be configured to cover one or more communication frequency bands. Different antennas may further be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the electronic device 100, to wireless communication including 2G, 3G, 4G, 5G, and the like The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, the at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device through a wireless communication technology. The electronic device 100 may implement a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor, and the like. The camera 193 is configured to capture a still image or a video. An optical image of an object is generated through the lens, and is projected onto a photosensitive element.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and a cellular network control method in embodiments of this application. The internal memory 121 may include a program storage region and a data storage region. The program storage region may store an operating system, an application required by at least one function (for example, a sound play function or an image play function), and the like. The data storage region may store data (such as audio data and a phone book) and the like that are created during use of the electronic device 100. In addition, the internal memory 121 may include a high-speed random access memory, and may further include a non-volatile memory, for example, at least one magnetic disk storage device, a flash memory, and a universal flash storage (universal flash storage, UFS).

The electronic device 100 may implement an audio function, for example, music play and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration alert. The motor 191 may be configured to provide an incoming call vibration prompt and a touch vibration feedback. For example, touch operations performed on different applications (such as photographing and audio play) may correspond to different vibration feedback effects. For touch operations performed on different regions of the display 194, the motor 191 may also correspondingly generate different vibration feedback effects. Different application scenarios (for example, a time reminder, information receiving, an alarm clock, and a game) may also correspond to different vibration feedback effects. The touch vibration feedback effect may be further customized.

The indicator 192 may be an indicator, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with the external memory card. The electronic device 100 interacts with a network through the SIM card to implement functions such as calls and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In embodiments of this application, an Android system of the layered architecture is used as an example to describe a software structure of the electronic device 100.

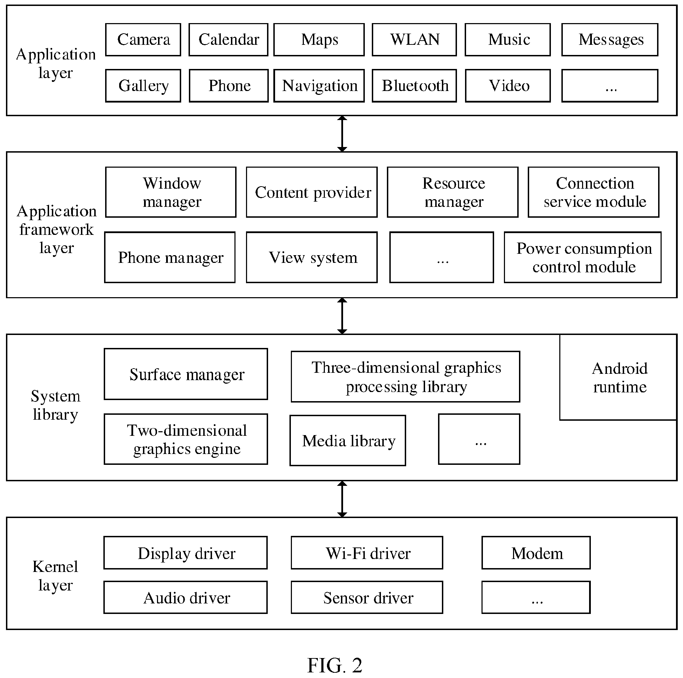

FIG. 2 is a block diagram of a software structure of the electronic device 100 according to embodiments of this application.

In a layered architecture of the electronic device 100, software is divided into several layers, and each layer has a clear role and task. The layers communicate with each other through a software interface. In some embodiments, an Android system is divided into four layers from top to bottom: an application layer, an application framework layer, Android runtime (Android runtime) and a system library, and a kernel layer.

The application layer may include a series of application packages.

As shown in FIG. 2, the application packages may include applications such as Camera, Gallery, Calendar, Phone, Maps, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a connection service module (ConnectivityService, CS), a power consumption control module, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, a phone book, and the like.

The view system includes visual controls such as a control for displaying text and a control for displaying a picture. The view system may be configured to construct an application. A display interface may include one or more views. For example, a display interface including a short message service message notification icon may include a view for displaying text and a view for displaying a picture.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message that may automatically disappear after a short pause without requiring user interaction. For example, the notification manager is configured to notify download completion, provide a message notification, and the like. The notification manager may alternatively be a notification that appears in a top status bar of the system in a form of a graph or a scroll bar text, for example, a notification of an application running in the background, or a notification that appears on a screen in a form of a dialog window. For example, text information is prompted in the status bar, a prompt tone is made, the electronic device vibrates, or an indicator light flashes.

The connection service module is configured to manage a network connection of the electronic device. A specific processing process is described in detail in the following embodiments.

The power consumption control module is configured to manage a status of an application and control the connection service module, and is run in a whole process from power-on to power-off of the electronic device.

The system library and runtime layer includes a system library and Android runtime (Android runtime). The system library may include a plurality of functional modules, for example, a surface manager (surface manager), a media library (Media Libraries), a three-dimensional graphics processing library (for example, OpenGL ES), and a 2D graphics engine (for example, SGL). The 3D graphics library is configured to implement three-dimensional graphics drawing, image rendering, synthesis, layer processing, and the like. The Android runtime includes a kernel library and a virtual machine. The Android runtime is responsible for scheduling and management of the Android system. The kernel library includes two parts: one part is a function that needs to be invoked by a Java language, and the other part is a kernel library of Android. The application layer and the application framework layer are run on the virtual machine. The virtual machine executes Java files at the application layer and the application framework layer as binary files. The virtual machine is configured to implement functions such as object lifecycle management, stack management, thread management, security and exception management, and garbage collection.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, a sensor driver, and a modem (modem).

It can be understood that components included in the system framework layer, and the system library and runtime layer that are shown in FIG. 2 do not constitute any specific limitation on the electronic device 100. In some other embodiments of this application, the electronic device 100 may include more or fewer components than those shown in the figure, or some components may be combined, or some components may be split, or a different component arrangement may be used.

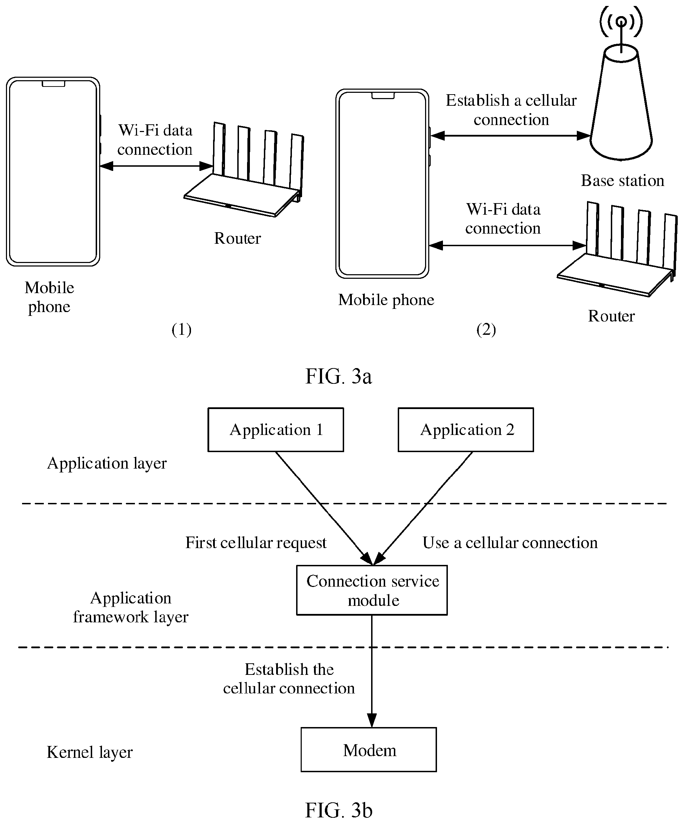

FIG. 3a is an example of a schematic diagram of network interaction of a mobile phone.

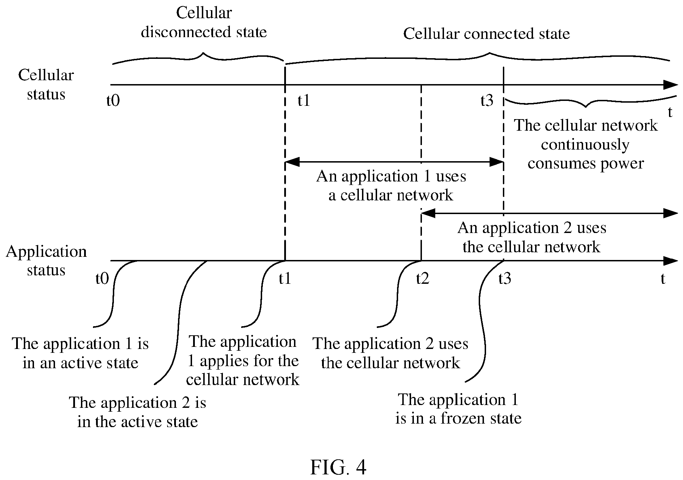

FIG. 3b is an example of a schematic flowchart of interaction between modules of the mobile phone according to this embodiment of the present invention. FIG. 4 is an example of a schematic diagram of a cellular status and an application status that are related to FIG. 3a and FIG. 3b.

Before FIG. 3a, FIG. 3b, and FIG. 4 are described in detail, the cellular status and the application status shown in FIG. 4 are briefly described herein.

Cellular disconnected state: The cellular disconnected state indicates that a cellular channel between the mobile phone and a base station is in a disconnected state.

Cellular connected state: The cellular connected state indicates that a cellular channel between the mobile phone and the base station is in a connected state.

An application is in an active state (which may be briefly referred to as an active state): That the application is in the active state indicates that the application is in a running state. The active state may include but is not limited to foreground running, background running, or the like.

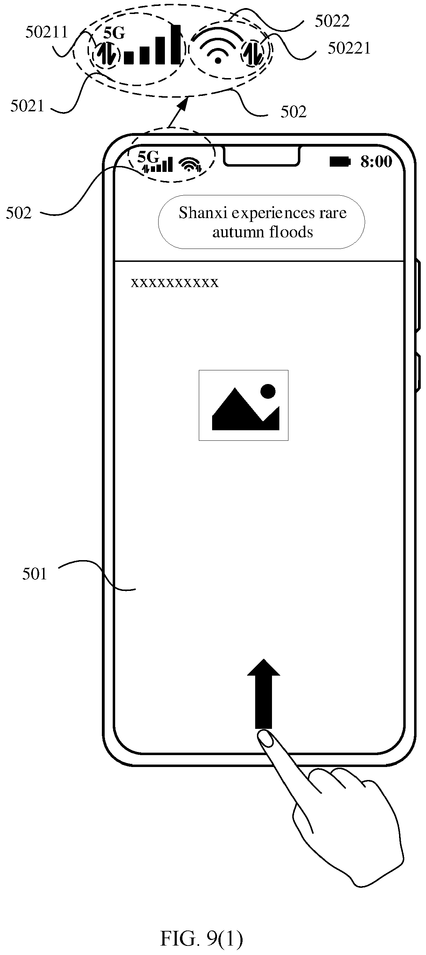

The foreground running may include but is not limited to:
a scenario in which an application running in the foreground is the only one application running in the foreground, for example, in FIG. 9(1), a foreground interface of the mobile phone includes only a news interface 501 of a browser application, and the browser application is the only one application running in the foreground; and
a scenario in which an application is one of at least two applications running in the foreground, for example, an application corresponding to an application interface in a picture-in-picture runs in the foreground, and for another example, an application corresponding to an application interface in a floating window runs in the foreground.

An application is in a frozen state (which may be briefly referred to as a frozen state): In one manner, a doze (doze, or sleep) state may be used to describe the frozen state. In another manner, after the application enters the background (to be a background application), the application does not perform data exchange with any module (for example, a CPU is no longer invoked) within preset duration of keeping running in the background, and therefore does not generate any application data. This may alternatively be used to describe the frozen state of the application.

The application data indicates any data generated by an application.

For example, after a music application is switched from the foreground to the background, the music application may continue to perform data exchange with an audio driver, to generate audio data. For example, if the music application continues to play music in the background, the music application is still in an active state in the background. In this case, the music application runs in the background.

For example, after the browser application is switched from the foreground to the background, if the browser application does not generate application data within 30s, it may be determined that the browser application is in the frozen state in the background. In this case, the browser application does not run in the background.

With reference to FIG. 3a, FIG. 3b, and FIG. 4, the following specifically describes a network use procedure of an application.

Refer to FIG. 3a(1). An example in which an electronic device is the mobile phone is used. When both a cellular data switch and a Wi-Fi data switch of the mobile phone are turned on, if the mobile phone is connected to a router by using Wi-Fi data, to reduce a problem of excessively high traffic consumption caused by use of a cellular network, an application (App, application) installed in the mobile phone performs data exchange with a server by default through a Wi-Fi network connected to the mobile phone, and does not apply for the cellular network, so that the cellular network of the mobile phone is in the cellular disconnected state.

Refer to FIG. 4. In a time period from t0 to t1 (excluding the moment t1), the mobile phone is connected to the router by using the Wi-Fi data in a manner shown in FIG. 3a(1), but is not connected to a base station through a cellular channel. A cellular status of the mobile phone in the time period from t0 to t1 is the cellular disconnected state. Both an application 1 and an application 2 of the mobile phone are in the active state. For example, both the application 1 and the application 2 run in the foreground, and use the Wi-Fi network to perform data communication with servers.

Still refer to FIG. 4. At the moment t1, although the mobile phone is connected to the router by using the Wi-Fi data, the application 1 needs to apply for using the cellular network because a preset condition is met. The preset condition may include but is not limited to: a service requirement, poor Wi-Fi signal quality, slow data transmission resulting from high occupation of a Wi-Fi channel, a requirement for transmitting encrypted data, and the like.

When the application 1 applies for using the cellular network, as shown in FIG. 3b, the application 1 may send a first cellular request to a connection service module (hereinafter referred to as a connection service module).

For example, the connection service module may store, in a first data structure, the first cellular request received from the application 1. The first data structure may be used to store a cellular request of an application that actively applies for the cellular network. For example, a request sequence number of a cellular request of each application is unique, and request sequence numbers of cellular requests of different applications are different.

A data structure (which may include the first data structure herein and a second data structure described below) described in this specification may include but is not limited to a linked list, an array, a vector, an XML file, a variable, a key-value pair, a queue, a stack, a tree, a heap, a hash list, and the like.

For example, the first data structure herein may be a linked list, and the cellular request may be stored in the linked list.

For example, the first cellular request may include but is not limited to the following parameters: a type of a network that is applied for (which is the cellular network herein), an application type identifier that identifies an application type of the application 1 (for example, whether the application 1 is a third-party application), a package name, and the like.

As shown in FIG. 3b, after receiving the first cellular request, the connection service module may indicate a modem to establish a cellular connection.

The modem may turn on a cellular-related radio frequency in response to the instruction, so that the cellular connection is established between the modem and the base station. For example, the modem may send a command used to enable the cellular-related radio frequency to a modem processor on a hardware side, and the modem processor may send a radio frequency signal to establish the cellular connection to the base station. As shown in FIG. 3a(2), the mobile phone not only is connected to the router by using the Wi-Fi data, but also establishes the cellular connection to the base station (that is, the cellular channel between the mobile phone and the base station is in the connected state), so that the mobile phone supports dual-network communication.

Refer to FIG. 4. After the moment t1, the mobile phone not only is connected to the router by using the Wi-Fi data, but also establishes the cellular connection to the base station. For example, after the application 1 applies for the cellular network at the moment t1, the cellular status of the mobile phone is switched from the cellular disconnected state to the cellular connected state.

Refer to FIG. 4. At the moment t1, the application 1 applies for the cellular network to establish the cellular connection between the mobile phone and the base station, that is, a cellular channel between the modem of the mobile phone and the base station is enabled and is in a connected state. Correspondingly, the connection service module may control to switch a network channel used by the application 1 from being connected to the Wi-Fi channel to being connected to the cellular channel, and the application 1 may start to use the cellular channel to perform data communication from the moment t1.

Still Refer to FIG. 3b and FIG. 4. After the application 2 starts an activity, before the moment t2, the application 2 may use the Wi-Fi channel to perform data communication. At the moment t2, the application 2 meets a preset condition (for example, poor Wi-Fi signal quality, and the preset condition may further include another condition listed above, which is not described herein), and uses the cellular network. However, the application 2 does not send a cellular request to the connection service module, but sends a listening request to the connection service module. The listening request is used to listen to whether the cellular channel between the modem and the base station is enabled, that is, listen to the cellular status. The connection service module may listen to, in response to the listening request, whether the cellular channel between the modem and the base station is enabled. If the cellular channel is not enabled, the connection service module continues to listen to the modem. If the connection service module listens to and detects, from the modem, that the cellular-related radio frequency is enabled, it indicates that the cellular connection has been established between the modem and the base station, and the cellular channel between the mobile phone and the base station has been enabled. In this example, the cellular connection between the mobile phone and the base station has been established at the moment t1 because the application 1 applies for the cellular network. Correspondingly, the connection service module may switch, at the moment t2, a network channel used by the application 2 from being connected to the Wi-Fi channel to being connected to the cellular channel. It can be seen from FIG. 4 that, the application 2 starts to use the cellular channel to perform data communication from the moment t2.

Optionally, in another embodiment, the application 2 may alternatively send the listening request to the connection service module after being started, and then the application 2 may start to use the cellular channel to perform data communication from the moment t1 when the application 1 applies for the cellular network.

Optionally, in another embodiment, after establishing the cellular connection to the base station, the modem may report, to the connection service module, a status value indicating that the cellular status is the cellular connected state, and the connection service module may store the status value of the cellular network, and update the status value based on a change of the cellular status. Therefore, at the moment t1, the application 1 applies for the cellular network to establish the cellular connection between the mobile phone and the base station, and the connection service module may determine, based on the stored status value of the cellular network, whether the cellular channel between the modem and the base station is enabled. If the status value is a value indicating the cellular connected state, it indicates that the cellular channel is enabled. If the status value is a value indicating the cellular disconnected state, it indicates that the cellular channel is in a disabled state, that is, the cellular channel is not enabled. In this case, the connection service module may obtain the cellular status information without listening.

Refer to FIG. 4. At a moment t3, the application 1 is switched from the active state to the frozen state. For example, when the browser application runs in the foreground, a user switches the browser application to the background by tapping a home button of the mobile phone, and if the browser application does not generate any data in the background for more than 30s, it is determined that the application 1 is in the frozen state at this moment (that is, at the moment t3).

It can be learned from FIG. 4 that the application 1 may use the cellular channel to perform data communication in a time period from t1 to t3. After the application 1 is frozen at the moment t3, the application 1 no longer needs to use the cellular channel to perform data communication.

After the application 1 applies for the cellular network at the moment t1, the cellular status of the mobile phone is constantly in the connected state. Even if the application 1 is switched from the active state to the frozen state at the moment t3, the cellular status does not change. In this case, the application 2 may continuously use the cellular channel to perform data communication after the moment t2. As a result, after the moment t3, the application 2 continuously uses the cellular channel. This causes the cellular network to continuously consume power. In a dual-network concurrency scenario, after some applications apply for the cellular network and use the cellular network, and after the application that applies for the cellular network is frozen, some applications that do not apply for the cellular network use the cellular network to perform data exchange with application servers. This causes an increase of power consumption of the mobile phone.

For example, a map application and a video application originally use the Wi-Fi network to perform data communication. The map application applies for the cellular network due to a service requirement. As a result, the cellular channel of the mobile phone is enabled, and a network used by the map application is switched from the Wi-Fi network to the cellular network. In this case, after the user switches the map application from running in the foreground to running in the background, if the map application does not generate any interaction data within a period of time after entering the background, for example, the map application does not interact with the CPU and does not trigger any action, it indicates that the map application is in the frozen state in the background, and the map application is suspended from using the cellular network. However, the cellular channel of the mobile phone is already enabled, and the video application may switch a network being used from the Wi-Fi network to the cellular network without applying for the cellular network. Consequently, after the map application is frozen, the video application may consume a large amount of cellular traffic. This causes continuous power consumption of the mobile phone.

To reduce, in the dual-network concurrency scenario, use of the cellular network by some unnecessary applications, and thereby reduce power consumption caused by the use of the cellular network by the application, an embodiment of the present invention provides a cellular network control method.

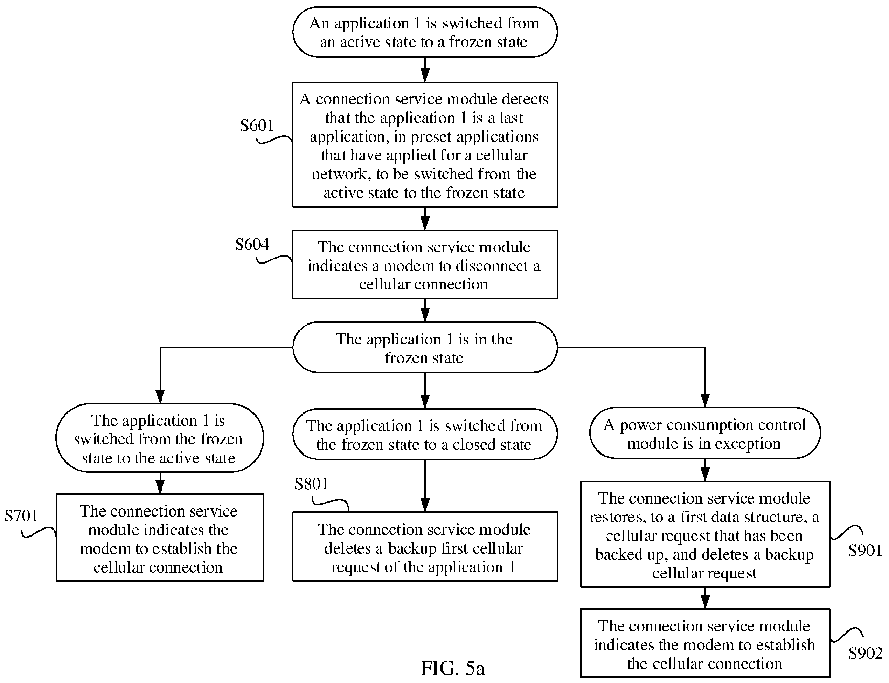

FIG. 5a is an overall schematic flowchart of a cellular network control method according to an embodiment of this application.

Refer to FIG. 5a. The method specifically includes:
A connection service module detects that an application 1 is switched from an active state to a frozen state, and performs S601.

S601: The connection service module detects that the application 1 is a last application, in preset applications that have applied for a cellular network, to be switched from the active state to the frozen state.

In other words, the application 1 is the last application that has applied for the cellular network and used the cellular network. The application 1 may apply for and use the cellular network in the active state before being switched from the active state to the frozen state.

Optionally, after S601 and before S604, the method may further include S602.

S602: The connection service module backs up a first cellular request of the application 1 in a first data structure.

Optionally, after S602 and before S604, the method may further include S603.

S603: The connection service module deletes the first cellular request from the first data structure.

S604: The connection service module indicates a modem to disconnect a cellular connection.

After the application 1 is in the frozen state, the connection service module detects that the application 1 is switched from the frozen state to the active state, and may perform S701.

S701: The connection service module indicates the modem to establish the cellular connection.

After the application 1 is in the frozen state, the connection service module detects that the application 1 is switched from the frozen state to a closed state (that is, a process of the application 1 is closed), and may perform S801.

S801: The connection service module deletes a backup first cellular request of the application 1.

After the application 1 is in the frozen state, when an exception occurs in self-check of a power consumption control module, and S901 may be performed.

S901: The connection service module restores, to the first data structure, a cellular request that has been backed up, and deletes a backup cellular request.

For example, the connection service module may re-write, onto the first data structure, cellular requests that have been backed up and that are of all applications that have applied for the cellular network, and delete backup cellular requests of all the applications that have applied for the cellular network.

S902: The connection service module indicates the modem to establish the cellular connection.

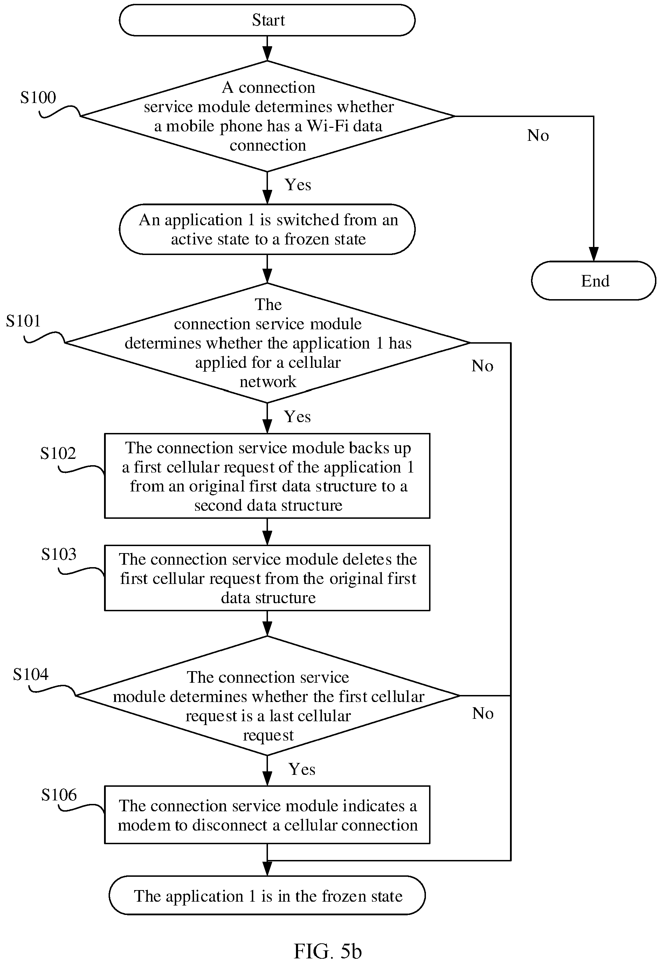

FIG. 5b to FIG. 8 are schematic flowcharts of a cellular network control method according to embodiments of this application.

The following describes the method in FIG. 5a in detail with reference to FIG. 5b to FIG. 8.

Refer to FIG. 5b. The method specifically includes:
S100: A connection service module determines whether a mobile phone has a Wi-Fi data connection.

For example, the connection service module may determine whether the mobile phone is connected to a router by using a modem.

For example, if the mobile phone is connected to the router by using the modem, it indicates that the mobile phone has the Wi-Fi data connection. If the modem of the mobile phone is not connected to the router, it indicates that the mobile phone does not have the Wi-Fi data connection.

When the mobile phone has the Wi-Fi data connection, an application in the mobile phone may perform data exchange with an application server through a Wi-Fi network. When the application in the mobile phone has applied for a cellular network, the mobile phone may not only perform data exchange with the application server through the Wi-Fi network, but also perform data exchange with the application server through the cellular network, so that the mobile phone is in a dual-network connection environment.

For example, an application 1 has applied for the cellular network. The application 1 interacts with a server of the application 1 through the cellular network. An application 3 and an application 4 respectively perform data exchange with an application server of the application 3 and an application server of the application 4 through the Wi-Fi network.

When the mobile phone does not have the Wi-Fi data connection, in consideration of the fact that the mobile phone is connected to only the cellular network for network communication, if the mobile phone performs cellular network control according to the method in this embodiment of this application, a cellular connection between the mobile phone and a base station may be disconnected due to a status change of an application that has applied for the cellular network (that is, the application is switched from an active state to a frozen state), which is not conducive to use of the cellular network by a user. Therefore, the mobile phone does not perform cellular network control, and a procedure directly ends.

For example, the connection service module may store a Wi-Fi status value, and the status value includes a status value indicating whether the Wi-Fi data connection exists between the mobile phone and the router, for example, includes a status value indicating a Wi-Fi connected state and a status value indicating a Wi-Fi disconnected state. The connection service module may query the stored Wi-Fi status value, to determine whether the mobile phone has the Wi-Fi data connection.

Certainly, a manner in which the connection service module determines whether the mobile phone has the Wi-Fi data connection is not limited to the foregoing examples, and may further include other known determining manners.

When the connection service module determines that the mobile phone has the Wi-Fi data connection, for example, when the mobile phone is connected to the router at home and can perform wireless network access, the connection service module may perform S101 when the application 1 is switched from the active state to the frozen state; otherwise, the procedure directly ends.

The connection service module may obtain, from a power consumption control module, information that the application 1 is switched from the active state to the frozen state. The connection service module may obtain various status information about the application from the power consumption control module.

For example, after the power consumption control module detects that the application 1 is switched from running in the foreground to the background, the application 1 may keep running in the background, or may not generate any action and not generate application data, to remain in the frozen state. In this example, if the power consumption control module detects that the application 1 is switched from the foreground to the background, and does not generate the application data within preset duration (for example, 30s, which may be set based on an actual requirement, and is not limited in this application) of running in the background, it may be determined that the application 1 is switched from the active state to the frozen state. Certainly, a manner of determining that the application is switched from the active state to the frozen state is not limited to this example.

In this case, after detecting that the application 1 is switched from the active state to the frozen state, the power consumption control module may notify the connection service module of a status change of the application 1.

FIG. 9(1) to FIG. 9(4) are an example of a schematic diagram of an application scenario for a process in which an application that applies for a cellular network is switched from an active state to a frozen state.

Refer to FIG. 9(1). A mobile phone displays a news interface 501 of a browser application. The news interface 501 includes one or more controls, and an implementation of the control may include but is not limited to: an icon, a button, a window, a layer, and the like.

As shown in FIG. 9(1), controls in the news interface 501 include but are not limited to a network icon 502, a battery icon, a time icon, and the like.

In FIG. 9(1) to FIG. 9(4), both a Wi-Fi network switch and a 5G cellular network switch in system settings of the mobile phone are in an on state. Correspondingly, the network icon 502 may include a 5G cellular network icon 5021 and a Wi-Fi network icon 5022. Optionally, if the Wi-Fi network switch is turned off, the Wi-Fi network icon 5022 is no longer displayed in the network icon 502. Optionally, if the 5G cellular network switch is turned off, the 5G cellular network icon 5021 is no longer displayed in the network icon 502.

In another embodiment, a cellular network indicated by the cellular network icon may alternatively be a 2G cellular network, a 3G cellular network, a 4G cellular network, or a cellular network with a level higher than 5G. This is not limited in this application.

In this embodiment of this application, for example, if a video application uses a Wi-Fi network to perform data communication, in FIG. 9(1), the Wi-Fi network icon 5022 includes an uplink-downlink identifier 50221 of Wi-Fi data. However, in a process of running in the foreground of the mobile phone, the browser application applies for and uses the cellular network due to a service requirement, so that the mobile phone establishes a cellular connection to a 5G base station. In this case, the 5G cellular network icon 5021 further includes an uplink-downlink identifier 50211 of a 5G cellular network. Certainly, in another embodiment, both the uplink-downlink identifier 50211 of the 5G cellular network and the uplink-downlink identifier 50221 of the Wi-Fi network may be replaced with an uplink identifier or a downlink identifier.

The uplink identifier indicates that network data uploaded in a direction from the mobile phone to an application server is included. The downlink identifier indicates that network data downloaded in a direction from the application server to the mobile phone is included. The uplink-downlink identifier identifies that two-way network data exchange between the mobile phone and the application server is included.

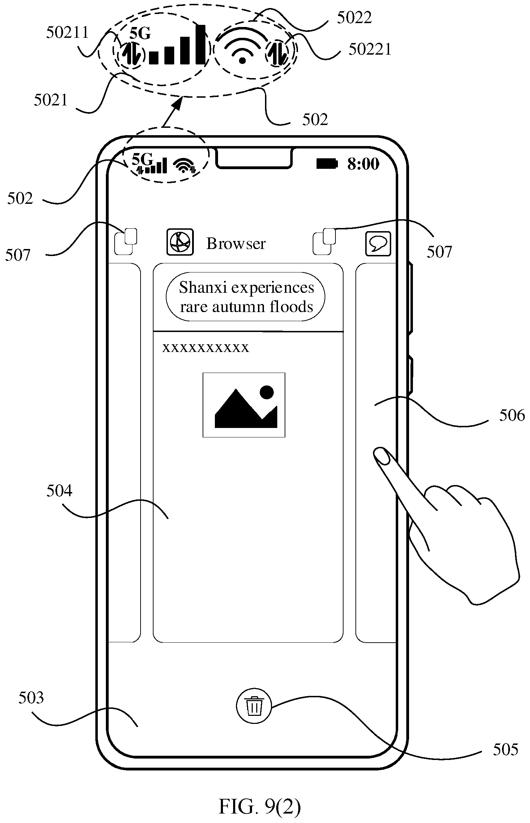

In FIG. 9(1), a user may perform an upward sliding operation on the news interface 501 from a bottom edge of the news interface 501 according to an arrow direction. The mobile phone may receive the sliding operation, and in response to the sliding operation, switch a display interface of the mobile phone from the news interface 501 to a program interface 503 shown in FIG. 9(2).

The program interface 503 may include one or more controls, and a specific implementation of the control may include but is not limited to an icon, a button, a window, a layer, and the like.

The program interface 503 includes but is not limited to: a thumbnail 504 of the news interface 501 of the browser application and a thumbnail 506 of a communication interface of a messages application, where applications in the program interface 503 are certainly not limited to the two applications described herein, and may further include more applications; a delete icon 505 displayed below each thumbnail in the program interface 503; application icons and application names displayed above the thumbnails, for example, an application name corresponding to the thumbnail 504 is Browser, and an application name corresponding to the thumbnail 506 is Messages; floating window controls 507 displayed above the thumbnails; and a network icon 502, a battery icon, and a time icon. For explanations of the network icon 502, a specific icon inside the network icon 502, the battery icon, and the time icon, refer to the description in FIG. 9(1). Details are not described herein again.

As shown in FIG. 9(2), the delete icon 505 displayed below the thumbnail 504 is used to close processes of all started applications on the program interface 503 in response to a user operation.

A floating window control 507 above the thumbnail 504 of the browser application is configured to display the news interface 501 of the browser application in a floating window in response to a user operation.

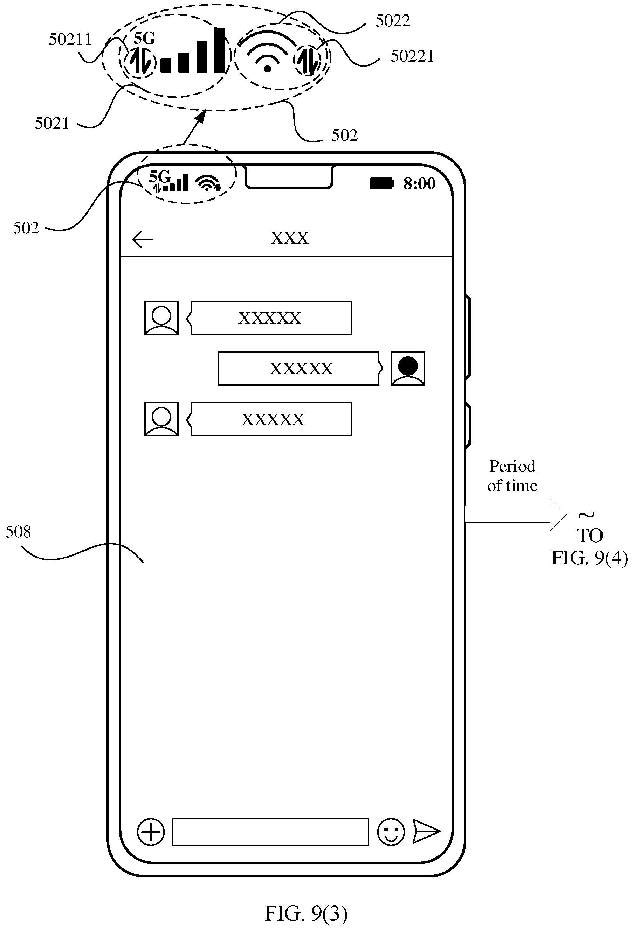

Still Refer to FIG. 9(2). On the program interface 503, the user performs a finger tapping operation on the thumbnail 506 of the communication interface of the messages application. The mobile phone may switch, in response to the finger tapping operation, the messages application from a background application to a foreground application for running. The browser application is switched from the foreground application to the background application. The display interface of the mobile phone is switched from the program interface 503 to the communication interface 508 of the messages application shown in FIG. 9(3).

The background application may generate application data and be in the active state, for example, the video application is downloading a video. Alternatively, the background application may not generate any data stream and be in the frozen state, for example, in FIG. 9(3), the browser application is switched from the foreground application to the background application.

For example, the communication interface 508 may include one or more controls, and a specific implementation of the control may include but is not limited to an icon, a button, a window, a layer, and the like.

The communication interface 508 includes but is not limited to the network icon 502, the battery icon, the time icon, and the like. For explanations of the network icon 502, the specific icon inside the network icon 502, the battery icon, and the time icon, refer to the description in FIG. 9(1). Details are not described herein again.

For example, after entering the background as the background application, the browser application may not immediately be switched from the active state to the frozen state. It can be learned from FIG. 9(1), FIG. 9(2), and FIG. 9(3) that the uplink-downlink identifier 50211 is still displayed in the 5G cellular network icon 5021. For example, after the browser application, the foreground application in FIG. 9(1), is switched to the background application in FIG. 9(3), if a power consumption control module detects that the browser application enters the background (that is, starting from display of the communication interface 508 in FIG. 9(3)) and does not perform any action or generate data within 30s, a connection service module may determine that the browser application is switched from the active state to the frozen state.

Still Refer to the schematic flowchart in FIG. 5b. After an application 1 is switched from the active state to the frozen state, the method continues to include the following steps.

S101: The connection service module determines whether the application 1 has applied for the cellular network.

Optionally, after the application 1 is switched from the active state to the frozen state, the connection service module may further determine whether the application 1 is a third-party application.

When the application 1 is the third-party application and has applied for the cellular network, the process goes to S102.

For example, the connection service module may determine, based on a preset application list or based on a system-level application type identifier of the application, whether the application 1 is the third-party application.

For example, the preset application list may include package name information of the third-party application, or include package name information of a system application. A package name of the application 1 is compared with a package name in the preset application list, to determine whether the application 1 is the third-party application.

For example, the third-party application may further have the foregoing application type identifier that identifies whether the application is the third-party application.

For example, an application that is pre-installed in the mobile phone and cannot be deleted may be the system application, and an application other than the system application is the third-party application.

For example, the connection service module may obtain the application type identifier of the application 1, to determine whether the application 1 is the third-party application.

For determining, by the connection service module, whether the application 1 has applied for the cellular network, refer to a process in which the application 1 applies for the cellular network in FIG. 3b, and it can be learned that after the application 1 applies to the connection service module for the cellular network, the connection service module may store a first cellular request of the application 1 in a first data structure. In this case, the connection service module may query whether the first cellular request of the application 1 exists in the first data structure, to determine whether the application 1 has applied for the cellular network. If the first cellular request of the application 1 exists in the first data structure, the connection service module determines that the application 1 has applied for the cellular network. On the contrary, if the first cellular request of the application 1 does not exist in the first data structure, the connection service module determines that the application 1 has not applied for the cellular network.

A request sequence number of a cellular request of each application is unique, and request sequence numbers of cellular requests of different applications are different. In this case, the connection service module may determine, based on a request sequence number of a cellular request stored in the first data structure, the cellular request initiated by the application 1.

Optionally, in an implementation, if the connection service module determines that the application 1 is not the third-party application, for example, is the system application, or the application 1 has not applied for the cellular network, or the application 1 is the system application and has not applied for the cellular network, the application 1 is directly switched to the frozen state, that is, processing of the method in this embodiment of this application does not need to be performed.

In this embodiment of this application, the connection service module in this embodiment of this application may reclaim the cellular network applied for by a third-party application and disconnect the cellular connection only when the third-party application (not a system application) actively applies for the cellular network for communication, to avoid power consumption caused by use of the cellular network by another application that does not apply for the cellular network. In consideration of the fact that a service faced by the system application is at a system level, the service at the system level is more critical. After the system application applies for the cellular network, the connection service module may not reclaim the cellular connection and perform management and control on disconnection of the cellular connection for the system application. Processing of reclaiming the cellular connection by the connection service module may include: The connection service module deletes a cellular request from the original first data structure.

Optionally, in another implementation, if the connection service module determines that the application 1 is not only the third-party application, but also has applied for the cellular network, S102 is performed.

Optionally, in still another implementation, the connection service module may not determine whether the application 1 is the third-party application. In other words, regardless of whether the application 1 is the third-party application, provided that the application has applied for the cellular network in the active state before the application is switched from the active state to the frozen state, the connection service module may reclaim the cellular request of the application and perform management and control on disconnection of the cellular connection according to the method in this embodiment of this application.

Optionally, in S102, the connection service module backs up the first cellular request of the application 1 from the original first data structure to a second data structure.

For example, the second data structure may be a linked list. The connection service module may back up the first cellular request from an original linked list to another linked list.

When the application 1 applies to the connection service module for the cellular network in the active state, the connection service module may store the first cellular request of the application 1 in the original first data structure. In this case, after the application 1 is switched from the active state to the frozen state, the connection service module may back up the first cellular request from the first data structure to the second data structure.

An objective of backing up, by the connection service module, the first cellular request to the second data structure is that after the application 1 is switched from the frozen state to the active state, the connection service module may restore the reclaimed cellular request by using a backup first cellular request, and re-establish the disconnected cellular connection between the mobile phone and the base station. Processing of restoring the cellular connection by the connection service module may include: The connection service module rewrites, onto the first data structure, the cellular request deleted from the original first data structure.

For example, the first data structure and the second data structure may be data structures of a same type or data structures of different types.

As described above, the data structure may include but is not limited to a linked list, an array, a vector, an XML file, a variable, a key-value pair, a queue, a stack, a tree, a heap, a hash list, and the like.

In an example, a type of the first data structure is different from a type of the second data structure. For example, the first data structure may be a linked list, and the second data structure may be a queue.

In another example, a type of the first data structure is the same as a type of the second data structure. For example, the first data structure may be a linked list, and the second data structure may be another linked list.

When an application actively applies for the cellular network, the connection service module may store a cellular request of the application in the first data structure. The cellular connection is established between the mobile phone and the base station only when the cellular request exists in the first data structure. On the contrary, if no cellular request exists in the first data structure, the cellular connection between the mobile phone and the base station needs to be disconnected.

Optionally, in S103, the connection service module deletes the first cellular request from the original first data structure.

To release the cellular network, the connection service module may delete the first cellular request of the application 1 from the first data structure.

Optionally, the first data structure in the connection service module may include one or more data structures.

Types of the plurality of first data structures may be the same or different.

For example, the first data structure may be a linked list, and the types of the plurality of first data structures are the same. In this case, the first cellular request may be stored in one or more linked lists.

For example, the plurality of first data structures may include but are not limited to: a first linked list in the connection service module, nai (which is also a linked list) corresponding to the first cellular request, and networkFactory (a linked list).

In this case, when deleting the first cellular request from the original first data structure, the connection service module may delete information that is about the first cellular request and that is stored in an original plurality of linked lists. For example, the connection service module may delete the first cellular request from the first linked list, remove, from a second linked list, nai corresponding to the first cellular request, and remove, from a third linked list, networkFactory including the first cellular request.

S104: The connection service module determines whether the first cellular request is a last cellular request.

In different scenarios, there may be one or more applications that actively apply for the cellular network to use the cellular network. When the plurality of applications actively apply for the cellular network to use the cellular network, each application that actively applies for the cellular network may send a cellular request of the application to the connection service module when applying for the cellular network, so that cellular requests of the plurality of applications can be stored in the first data structure of the connection service module. In consideration of the fact that in a scenario in which the plurality of applications apply for the cellular network, the cellular connection between the mobile phone and the base station cannot be directly disconnected because a single application is switched from the active state to the frozen state, the connection service module may perform the step of determining in S104 before the cellular connection is disconnected.

For example, the connection service module may query the first data structure, to determine whether a cellular request exists in the first data structure. If no cellular request exists in the first data structure, the connection service module may determine that the first cellular request is the last cellular request. In other words, all the applications that actively apply for the cellular network have been switched from the active state to the frozen state. If it is found that at least one cellular request exists in the first data structure, the connection service module may determine that the first cellular request is not the last cellular request. In other words, applications other than the application 1 have applied for the cellular network in the active state and used the cellular network to perform data exchange with application servers, and these applications are still in the active state.

Optionally, if there are a plurality of first data structures, the connection service module needs to go through each first data structure to determine whether no cellular request exists in each first data structure. If no cellular request exists in the plurality of first data structures, the connection service module determines that the first cellular request is the last cellular request.

If the connection service module determines that the first cellular request is the last cellular request, that is, all the applications that apply for the cellular network have been switched from the active state to the frozen state, the connection service module may indicate the modem to disable the cellular network, in other words, disconnect the cellular connection between the modem and the base station.

If the connection service module determines that a cellular request exists in the first data structure in addition to the first cellular request, that is, not all the applications that apply for the cellular network are in the frozen state, a procedure directly turns to that the application 1 is in the frozen state, and no processing is performed in this application.

In this embodiment of this application, after all the applications that apply for the cellular network are frozen, the connection service module may disconnect the cellular connection between the mobile phone and the base station. This can ensure that after some applications that apply for the cellular network are frozen, use of the cellular network by another application that is in the active state and that has applied for the cellular network is not affected.

In this embodiment, when determining that the first cellular request is the last cellular request, the connection service module performs S106.

In addition, it should be noted that, when the plurality of applications actively apply for the cellular network, after a 1st application actively applies for the cellular network, a cellular channel is established between the modem and the base station. When another application (for example, an application 3) actively applies to the connection service module for the cellular network, the connection service module does not need to indicate the modem to establish the cellular connection to the base station. The connection service module may connect a network channel used by the application 3 to the established cellular channel, so that the application 3 uses the cellular network to perform data exchange with an application server.

Optionally, in most scenarios, for most applications, if the applications determine that a cellular channel between the mobile phone and the base station is enabled, the applications directly use the cellular channel when the applications need to use the cellular network, and do not actively apply to the connection service module for the cellular network. Correspondingly, a quantity of the applications that actively apply for the cellular network usually does not exceed 3.

Optionally, before S106, the method in this embodiment of this application may further include S105.

S105: The connection service module determines whether a network meets a first preset condition.

When the connection service module determines that the first cellular request is the last cellular request, before indicating the modem to disconnect the cellular connection to the base station, the connection service module may perform network evaluation indicated in this step. The connection service module performs S106 only when the network evaluation meets the condition; otherwise, the procedure directly turns to that the application 1 is in the frozen state, and no processing is performed in this application.

When the connection service module performs network evaluation herein, evaluation content may include but is not limited to at least one of the following:

Evaluation content 1: The connection service module determines whether the network of the mobile phone may be switched from a Wi-Fi and cellular dual connection to a single Wi-Fi connection. In consideration of the fact that the network may fail to be normally switched from the dual connection to the single connection, whether the network may be normally switched needs to be evaluated.

Evaluation content 2: The connection service module determines whether the single Wi-Fi connection is available.

For example, Wi-Fi signal quality is excessively poor, and the mobile phone cannot use a Wi-Fi connection to perform data communication. That is, although the mobile phone is connected to Wi-Fi of a local area network, the Wi-Fi network may be unable to be used to perform network communication. As a result, the Wi-Fi connection of the mobile phone is unavailable.

For another example, although the mobile phone is connected to the Wi-Fi network when the application 1 is switched from the active state to the frozen state, a Wi-Fi data switch in the system settings may be turned off by the user in a process in which the connection service module performs the procedure in FIG. 5b, which causes the Wi-Fi connection to be unavailable.

The connection service module performs S106 only when the connection service module evaluates that the network can be normally switched from the dual connection to the single connection and the single connection is available.

In this embodiment of this application, before indicating the modem to disconnect the cellular connection between the mobile phone and the base station, the connection service module may perform network evaluation. The connection service module indicates the modem to disconnect the cellular connection to the base station only when the connection service module evaluates that network can meet the first preset condition. This can ensure that when the mobile phone is switched from the dual Wi-Fi and cellular connection to the single Wi-Fi connection, disconnection of the cellular connection does not affect communication in a Wi-Fi channel, and the mobile phone can use the Wi-Fi channel to perform network communication, to ensure that the mobile phone is not affected by disconnection of the cellular connection when accessing the network through Wi-Fi.

S106: The connection service module indicates the modem to disconnect the cellular connection.

For example, the connection service module may invoke rematch to implement this step. Rematch is configured to send, to the modem, a command indicating disconnecting the cellular connection.

In this way, after receiving the foregoing command sent by the connection service module, the modem may disable a cellular-related radio frequency, to disconnect the cellular connection between the modem of the mobile phone and the base station.

After S106, a procedure turns to that the application 1 is in the frozen state, and ends.

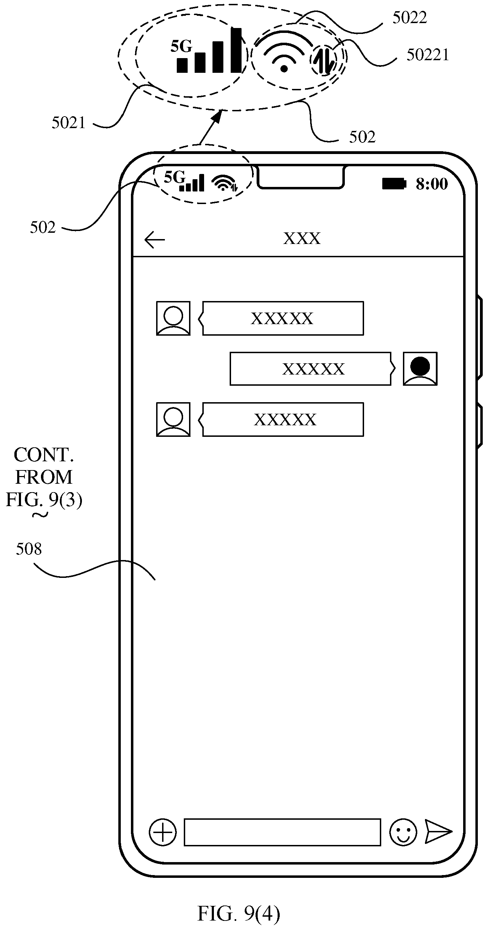

For example, continue to return to FIG. 9(1) to FIG. 9(4). Refer to FIG. 9(1), FIG. 9(2), and FIG. 9(3). After the browser application is switched from the foreground application to the background application and the interface in FIG. 9(3) is displayed, if the browser application does not perform any operation for a preset duration (for example, 30s), it indicates that the browser application is switched from the active state to the frozen state, and the procedure shown in FIG. 5b is performed. From a perspective of the user, after the mobile phone displays the interface in FIG. 9(3), the mobile phone is switched to an interface shown in FIG. 9(4) after a period of time (for example, 30s). Compare FIG. 9(3) and FIG. 9(4) and it can be found that the browser application that actively applies for the cellular network is switched from the active state to the frozen state, so that the modem disconnects the cellular connection to the base station. Therefore, exchange of 5G cellular data does not exist between the mobile phone and the base station. It can be seen from FIG. 9(4) that the uplink-downlink identifier 50211 in the 5G cellular network icon 5021 is no longer displayed.

In consideration of the fact that in a scenario in which the Wi-Fi channel is enabled, if an application is connected to the cellular network again, the cellular network occupies resources. Consequently, use of the cellular connection by the application causes a great increase in power consumption of the mobile phone. To reduce, in a dual-network concurrency scenario, use of the cellular network by some unnecessary applications, and thereby reduce increased power consumption caused by use of the cellular network by the application. In this embodiment of this application, after the application that actively applies for the cellular network is switched from the active state to the frozen state, the mobile phone may reclaim the cellular request of the application and disconnect the cellular connection between the mobile phone and the base station. Therefore, after the application is frozen, the another application that does not apply for the cellular network cannot continue to use the cellular connection, to reduce power consumption caused by use of the cellular network by the application, and achieve effect of conserving power of the mobile phone.

It should be noted that a sequence of performing S102 and S104 in FIG. 5b is not limited in this application.

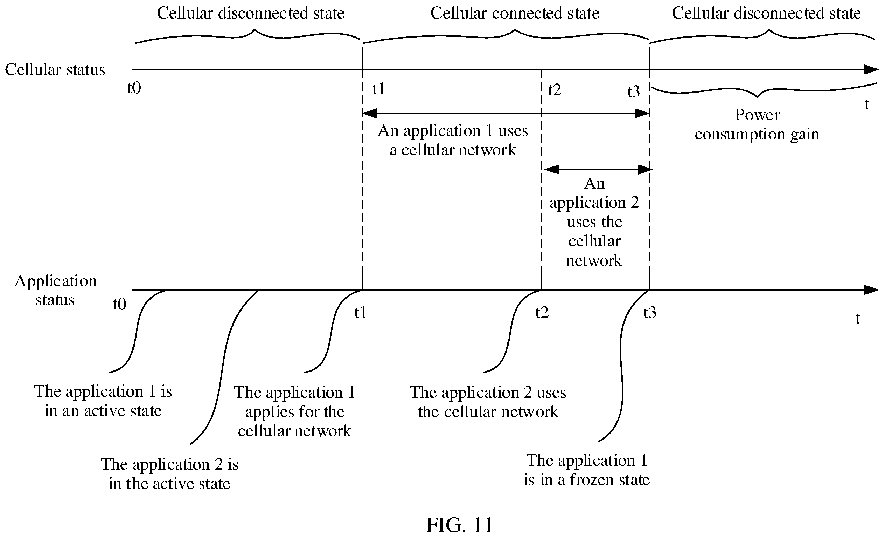

In a possible implementation, the cellular network control method shown in FIG. 5b may be used to perform cellular network control on a mobile phone. FIG. 11 is an example of a schematic diagram of a cellular status and an application status after cellular network control is performed by using the method shown in FIG. 5b.

For ease of understanding, FIG. 11 may be compared with FIG. 4. For a same part between FIG. 11 and FIG. 4, directly refer to descriptions in FIG. 4. Details are not described in the following. The following describes changes of the cellular status and the application status in FIG. 11.

In the implementation in FIG. 11, only one application (that is, an application 1) actively applies for a cellular network in a time period from t0 to t3.

In a time period from t0 to t1, both the application 1 and an application 2 are in an active state, for example, in a foreground running state or a background running state. If the application 1 and the application 2 respectively perform data exchange with an application server of the application 1 and an application server of the application 2 through a network, the application 1 and the application 2 may use a Wi-Fi channel to perform data communication in the time period from t0 to t1. Therefore, in the time period from t0 to t1, the cellular status is a cellular disconnected state.

The application 1 applies for the cellular network at the moment t1, so that the cell network starts to be in a connected state from the moment t1. Then, the application 1 may start to use, from the moment t1, a cellular channel that is actively applied for to perform data communication.

From a moment t2, the application 2 starts to use the cellular channel applied for by the application 1 to perform data communication. At the moment t2, the application 2 that originally uses the Wi-Fi channel to perform data communication starts to perform, without applying for the cellular network, data communication with the application server of the application 2 through a cellular connection that has been established between a modem and a base station. From the moment t2, the application 2 may continuously perform data communication through the cellular channel that is established because the application 1 applies for the cellular network, until the application 1 is switched from the active state to a frozen state.

At the moment t3, the application 1 is switched from the active state to the frozen state. For example, the application 1 is switched from running in the foreground to running in the background, and does not generate any application data for more than 30s after running in the background for a period of time. Therefore, refer to the procedure in FIG. 5b and it can be learned that, in this implementation, a first cellular request of the application 1 is a last cellular request. A connection service module may not only delete the first cellular request of the application 1 from an original first data structure, to achieve an objective of reclaiming the cellular request, but also control the modem to disconnect the cellular connection to the base station. Correspondingly, in FIG. 11, from the moment t3, the cellular network is in the cellular disconnected state. Because the cellular channel between the mobile phone and the base station is disconnected, the application 2 may use the cellular channel applied for by the application 1 to perform data communication only in a time period from t2 to t3, and cannot continue to use the cellular channel to perform data communication after the moment t3 at which the application 1 is switched to the frozen state. If the application 2 needs to use a network at the moment t3, the application 2 may perform data exchange with the application server of the application 2 through a Wi-Fi network. In this implementation, the mobile phone may disconnect the cellular connection of the mobile phone when the application 1 is switched from the active state to the frozen state, to avoid power consumption caused by continuing use of the cellular connection by another application that does not apply for the cellular network, and thereby generate a power consumption gain.

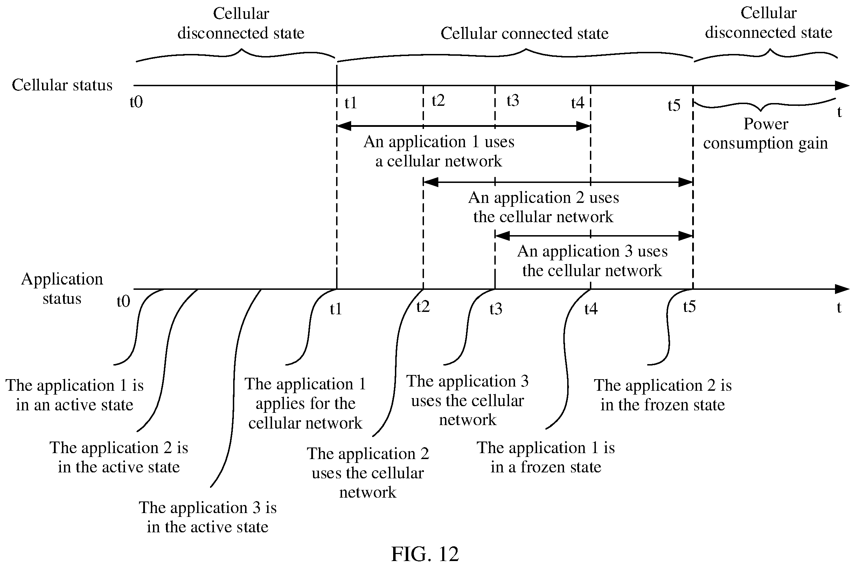

In another possible implementation, the cellular network control method shown in FIG. 5b may be used to perform cellular network control on a mobile phone. FIG. 12 is an example of a schematic diagram of a cellular status and an application status after cellular network control is performed by using the method shown in FIG. 5b.

For ease of understanding, FIG. 12 may be compared with FIG. 4 and FIG. 11. The following describes in detail changes of the cellular status and the application status in FIG. 12.

First, different from the implementations in FIG. 4 and FIG. 11, in FIG. 12, not only an application 1 is an application that actively applies for a cellular network, but also an application 2 is an application that actively applies for the cellular network, and an application 3 is an application that directly uses, without applying for the cellular network, the cellular network applied for by another application.

Second, in FIG. 11, before the application 1 is frozen (frozen at a moment t3), only one application (that is, the application 1) actively applies for the cellular network. In an implementation of FIG. 12, before the application 1 is frozen (frozen at a moment t4), two applications (the application 1 and the application 2) actively apply for the cellular network.

The following describes in detail a procedure in FIG. 12.

The application 1, the application 2, and the application 3 are all in the active state in a time period from t0 to t1. For example, the application 1 and the application 2 run in the foreground, and the application 3 runs in the background. If the application 1, the application 2, and the application 3 use a network, the application 1, the application 2, and the application 3 may use a Wi-Fi channel to perform data communication in the time period from t0 to t1. In this case, in the time period from t0 to t1, the cellular status of the mobile phone is a cellular disconnected state.

The application 1 applies for the cellular network at the moment t1, so that the cellular status of the mobile phone starts to be a cellular connected state from the moment t1, and the application 1 starts to use, from the moment t1, the cellular channel that is actively applied for to perform data communication.

At a moment t2, the application 2 applies for the cellular network. Because the application 1 has applied for the cellular network before the moment t2, the cellular connection is established between the modem and the base station. In addition, after the application 2 applies for the cellular network at the moment t2, the application 2 may reuse the cellular connection that is established between the modem and the base station because the application 1 applies for the cellular network, to perform data communication.

At the moment t3, the application 3 starts to use the cellular connection to perform data communication.

At the moment t4, the application 1 is switched from the active state to the frozen state. In this case, when the mobile phone performs processing according to the procedure in FIG. 5b, because the mobile phone further receives a cellular request of the application 2, the mobile phone may determine that the cellular request (that is, the first cellular request) of the application 1 is not the last cellular request. In this case, at the moment t4, the mobile phone does not disconnect the cellular connection between the modem and the base station, but only reclaims the first cellular request. Therefore, the application 3 may continue to use the cellular channel to perform data communication after the moment t4, and the application 1 uses the cellular channel to perform data communication in a period of time from the moment t1 at which the application 1 applies for the cellular network to the moment t4 at which the application 1 is switched to the frozen state.

At a moment t5, the application 2 is switched from the active state to the frozen state. When the mobile phone performs processing according to the procedure in FIG. 5b, because both the application 1 and the application 2 that actively apply for the cellular network are switched from the active state to the frozen state in a time period from t0 to t5, the mobile phone may determine that a second cellular request of the application 2 is a last cellular request that has not been reclaimed. At the moment t5, the mobile phone may disconnect the cellular connection between the modem and the base station. The cellular status of the mobile phone in a time period from t1 to t5 is the cellular connected state, but after the moment t5, the cellular status of the mobile phone is the cellular disconnected state.

From the moment t5, the cellular status of the mobile phone is the cellular disconnected state, and the cellular channel between the mobile phone and the base station is disconnected. It can be learned from FIG. 12 that the application 3 uses the cellular channel to perform data communication in a time period from t3 to t5. After the moment t5, the application 3 cannot continue to use the cellular channel to perform data communication. The application 2 uses the cellular channel to perform data communication in a time period from t2 to t5. The mobile phone starts to generate a power consumption gain from the moment t5 at which the application 2 is switched from the active state to the frozen state, until either of the application 1 and the application 2 is restored from the frozen state to the active state.

It should be noted that, for same or similar parts between FIG. 11 and FIG. 4, refer to the description of FIG. 4 for FIG. 11. Similarly, for same or similar parts between FIG. 12 and FIG. 4, refer to the description of FIG. 4 for FIG. 12. Details are not described herein again.

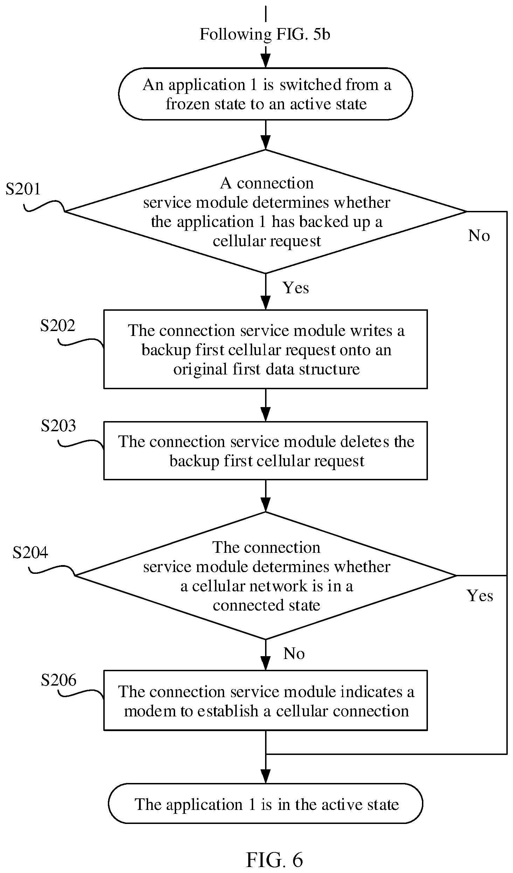

In another embodiment, after FIG. 5b, continue to refer to a schematic flowchart, as shown FIG. 6, of a cellular network control method according to an embodiment of the present invention. Refer to FIG. 6. After the procedure in FIG. 5b, when an application 1 is switched from a frozen state to an active state, the procedure shown in FIG. 6 may be performed.

A manner in which an application enters the active state may include: An application process is restarted after being closed, so that the application enters the active state. The manner may further include: After the application is frozen in the background, the application reenters the foreground or the background for running, so that the application is in the active state. The procedure shown in FIG. 6 in this embodiment of the present invention is mainly used to restore a cellular connection and enable a cellular channel for an application that is switched from the frozen state to the active state.

For example, a power consumption control module may obtain status information of the application 1. After the application 1 is switched from the frozen state to the active state, the power consumption control module may notify a connection service module of a status change of the application 1.

For example, after detecting that the application 1 does not perform data exchange with another module in the background for more than 30s, the power consumption control module detects that the application 1 is switched to the foreground for running. In this case, the power consumption control module may determine that the application 1 is switched from the frozen state to the active state.

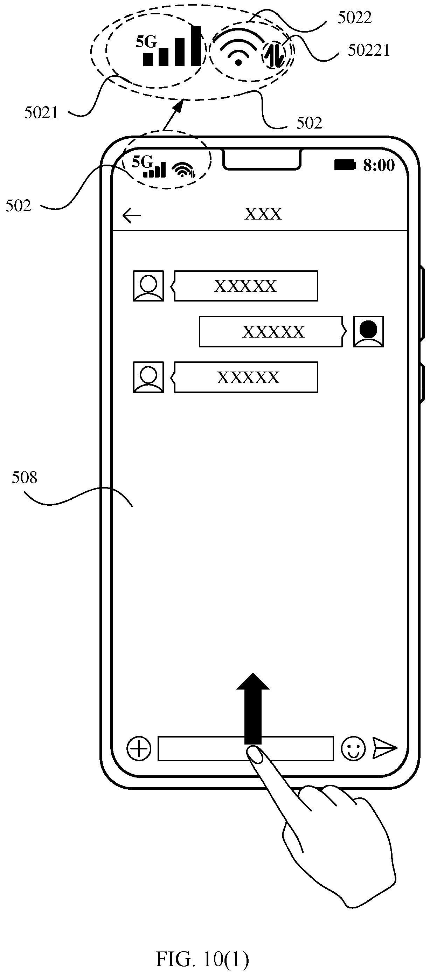

For example, FIG. 10(1) to FIG. 10(3) are an example of a schematic diagram of an application scenario for a process in which an application that applies for a cellular network is switched from a frozen state to an active state. It can be learned from the application scenario in FIG. 9(1) to FIG. 9(4) that a browser application is in the frozen state after FIG. 9(4). In FIG. 10(1) to FIG. 10(3), FIG. 10(1) is a schematic diagram following FIG. 9(4).

Refer to FIG. 10(1). A mobile phone displays a communication interface 508 of a messages application. Specifically, for a control included in the communication interface 508, refer to descriptions in FIG. 9(4). Details are not described herein again.

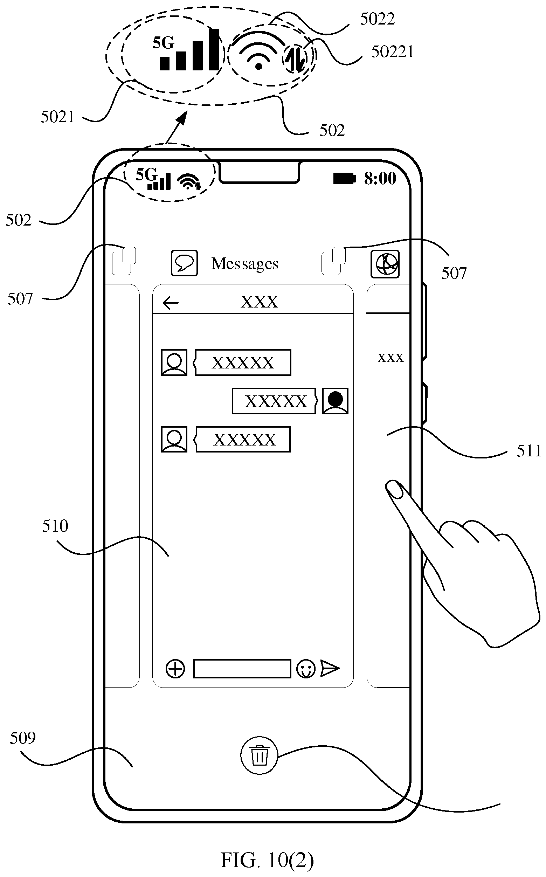

In FIG. 10(1), a user performs an upward sliding operation on the communication interface 508 from a bottom edge of the communication interface 508 according to an arrow direction. The mobile phone may receive the sliding operation, and in response to the sliding operation, switch a display interface of the mobile phone from the communication interface 508 to a program interface 509 shown in FIG. 10(2).

The program interface 509 may include one or more controls, and a specific implementation of the control may include but is not limited to an icon, a button, a window, a layer, and the like.

The program interface 509 includes but is not limited to: a thumbnail 510 of the communication interface of the messages application and a thumbnail 511 of a news interface of a browser application, where applications in the program interface 509 are certainly not limited to the two applications described herein, and may further include more applications; a delete icon 505 displayed below each thumbnail in the program interface 509; application icons and application names displayed above the thumbnails, for example, an application name corresponding to the thumbnail 510 is Messages, and an application name corresponding to the thumbnail 11 is Browser; floating window controls 507 displayed above the thumbnails; and a network icon 502, a battery icon, and a time icon. For explanations of the network icon 502, a specific icon inside the network icon 502, the battery icon, and the time icon, refer to the description in FIG. 10(1). Details are not described herein again.

As shown in FIG. 10(2), the delete icon 505 displayed below the thumbnail 510 is used to close processes of all started applications on the program interface 503 in response to a user operation.

A floating window control 507 above the thumbnail 510 of the messages application is configured to display a display interface (the communication interface herein) of the messages application in a floating window in response to a user operation.

It can be learned from FIG. 10(1) and FIG. 10(2) that, because the browser application that applies for a cellular network is in the frozen state, for example, the browser application is a background application and does not generate any action, the mobile phone performs a procedure of the method in the embodiment in FIG. 5, to disconnect a cellular connection between the mobile phone and a base station. In this case, in FIG. 10(1) and FIG. 10(2), a 5G cellular network icon 5021 does not have an uplink-downlink identifier 50211.

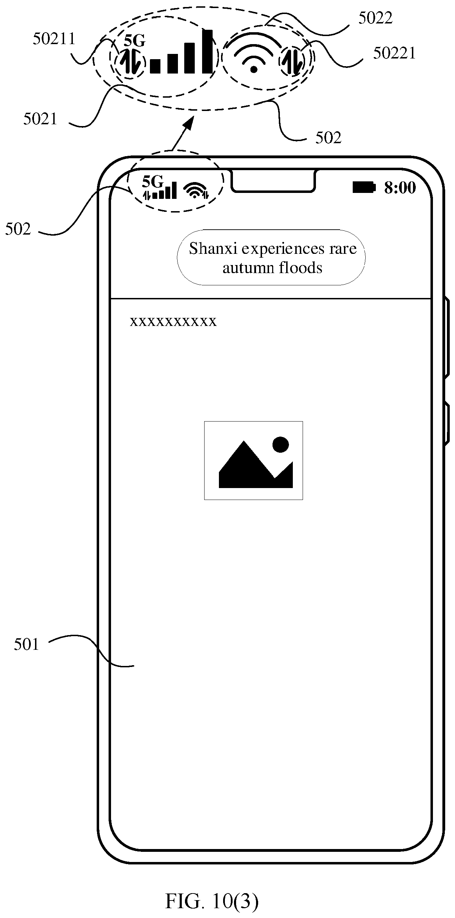

Still refer to FIG. 10(2). On the program interface 509, the user performs a finger tapping operation on the thumbnail 511 of the news interface of the browser application. The mobile phone may switch, in response to the finger tapping operation, the browser application from the frozen state in which the browser application does not generate any data in the background to a foreground running state (that is, the active state). The display interface of the mobile phone is also switched from the program interface 509 to the news interface 501 of the browser application shown in FIG. 10(3).

After the browser application is switched from the frozen state to the active state, a connection service module in the mobile phone may perform the procedure shown in FIG. 6, to indicate a modem to establish the cellular connection to the base station. After the modem enables a cellular-related radio frequency, a cellular channel between the mobile phone and the base station may be enabled. When the mobile phone performs the procedure shown in FIG. 6, an execution speed is fast. From a perspective of the user, after FIG. 10(2) is switched to FIG. 10(3), the user may directly see, in FIG. 10(3) that is displayed, that the uplink-downlink identifier 50211 is already displayed in the 5G cellular network icon 5021. The uplink-downlink identifier 50211 may indicate that 5G cellular data is exchanged between the mobile phone and the base station through the cellular connection established between the mobile phone and the base station.

Specifically, for a control included in the news interface 501 in FIG. 10(3), refer to descriptions of the control in FIG. 9(1). Details are not described herein again.

After an application 1 (the application 1 is the browser application in FIG. 10(1) to FIG. 10(3)) is switched from the frozen state to the active state, continue to refer to FIG. 6, and the connection service module of the mobile phone may perform S201.

S201: The connection service module determines whether the application 1 has backed up a cellular request.

Optionally, after the application 1 is switched from the frozen state to the active state, the connection service module may further determine whether the application 1 is a third-party application.

For a specific manner in which the connection service module determines whether the application 1 is the third-party application, refer to specific descriptions in FIG. 5b. Details are not described herein again.

The connection service module may query whether the cellular request of the application 1 exists in a second data structure, to implement a specific manner of determining, by the connection service module, whether the cellular request of the application 1 has been backed up. If the connection service module determines that a first cellular request of the application 1 exists in the second data structure, it indicates that the connection service module has backed up the cellular request of the application 1. If the first cellular request of the application 1 does not exist in the second data structure of the connection service module, it indicates that the connection service module has not backed up the cellular request of the application 1.

Optionally, in an implementation, when the application 1 is the third-party application and the connection service module has backed up the cellular request of the application 1, the connection service module performs S202; otherwise, a procedure directly turns to that the application 1 is in the active state, and ends.

Optionally, in another implementation, when the connection service module has backed up the cellular request of the application 1, the connection service module performs S202; otherwise, the procedure directly turns to that the application 1 is in the active state, and ends.

S202: The connection service module writes a backup first cellular request onto an original first data structure.

It can be learned from the procedure in FIG. 5b that, after the application 1 is switched from the active state to the frozen state, the first cellular request that is written onto the first data structure when the application 1 applies for the cellular network is deleted. Therefore, after the application 1 is restored from the frozen state to the active state, the connection service module may rewrite the first cellular request into the first data structure by using the backup first cellular request in the second data structure, to restore the cellular request.

Optionally, in S203, the connection service module deletes the backup first cellular request.

The connection service module may delete the backup cellular request, that is, the backup first cellular request, of the application 1 in the second data structure, to save storage space.

Optionally, in S204, the connection service module determines whether the cellular network is in a connected state.

For example, the connection service module may store a status value of the cellular network. For example, if the status value is 1, it indicates that a cellular status is a cellular connected state, and if the status value is 0, it indicates that the cellular status is a cellular disconnected state (that is, not in the connected state). The connection service module may query the status value, to determine whether the cellular network is currently in the connected state.

The connection service module may obtain the status value of the cellular network from the modem. After the modem enables the cellular-related radio frequency, a cellular connection between the modem and the base station is established, and the modem may report, to the connection service module, information indicating that the cellular status is the cellular connected state. Similarly, after the modem disables the cellular-related radio frequency, the cellular connection between the modem and the base station is disconnected, and the modem may report, to the connection service module, information indicating that the cellular network is in the cellular disconnected state. When the cellular status changes, the modem may report a latest cellular status to the connection service module, so that the connection service module may store the status value of the cellular network.

In a possible implementation, when the connection service module determines that the cellular status is the cellular connected state, it indicates that after the application 1 is frozen, another application actively applies for the cellular network, so that the cellular channel between the modem and the base station is enabled, and the cellular status is the cellular connected state. In this case, the connection service module does not need to indicate the modem to establish the cellular connection to the base station.

In another possible implementation, when the connection service module determines that the cellular status is the cellular disconnected state (that is, not in the connected state), it indicates that after the application 1 is frozen, the cellular connection is still disconnected and is not reconnected. In this case, the connection service module may perform S206 to indicate the modem to establish the cellular connection.

Optionally, after the connection service module determines that the cellular status is the cellular disconnected state, and before S206, the connection service module may perform S205 to perform network evaluation.

Optionally, in S205, the connection service module determines whether a network meets a second preset condition.

For example, before the cellular connection between the modem and the base station is established, network evaluation in this step may be performed. When the network evaluation meets the condition, the connection service module may perform S206; otherwise, the procedure directly turns to that the application 1 is in the active state. No processing is performed in this application, and the procedure directly ends.

Herein, when the connection service module performs network evaluation, evaluation content may include but is not limited to at least one of the following:

The connection service module determines whether the network may be switched from a single cellular connection to a Wi-Fi and cellular dual connection. Because the network may fail to be normally switched from the single connection to the dual connection, whether the network may be normally switched needs to be evaluated.

For example, if the connection service module determines that the network of the mobile phone cannot be switched from the single cellular connection to the Wi-Fi and cellular dual connection, the connection service module determines that the network does not meet the second preset condition.

The connection service module determines whether a cellular switch in system settings is in an on state.

For example, if the user sets the cellular switch in the setting of the mobile phone to an off state, the connection service module determines that the network does not meet the second preset condition.

The connection service module determines whether a data network of the mobile phone is available.

For example, if the data network of the mobile phone is unavailable due to reasons such as suspension of the mobile phone due to an unpaid bill, the connection service module determines that the network does not meet the second preset condition.

In this embodiment of this application, before the cellular connection between the mobile phone and the base station is established, the connection service module may perform network evaluation. When the connection service module evaluates the network meets the second preset condition, for example, the connection service module determines that the network of the mobile phone may be switched from the single cellular connection to the Wi-Fi and cellular dual connection, the cellular switch in the system settings is in the on state, and the data network of the mobile phone is available, the connection service module may indicate the modem to establish the cellular connection between the modem and the base station. In this way, the cellular connection can be normally established, and when the mobile phone is switched from a single Wi-Fi connection to the Wi-Fi and cellular dual connection, establishment of the cellular connection does not affect communication in a Wi-Fi channel, and the mobile phone may continue to use the Wi-Fi channel to perform network communication, to ensure that the mobile phone is not affected by establishment of the cellular connection when accessing the network through Wi-Fi.

S206: The connection service module indicates the modem to establish the cellular connection.

For example, the connection service module may invoke rematch to implement this step. Rematch is configured to send, to the modem, a command indicating establishing the cellular connection. After receiving the foregoing command sent by the connection service module, the modem may enable the cellular-related radio frequency, to establish the cellular connection between the modem of the mobile phone and the base station, and enable the cellular channel between the mobile phone and the base station to perform data communication.

After S206, the procedure turns to that the application 1 is in the active state, and ends.

In this embodiment of this application, after the application is switched from the active state to the frozen state, the mobile phone may reclaim the cellular request of the application in time. When all applications that have applied for the cellular network are switched from the active state to the frozen state, the mobile phone may disable the cellular channel between the mobile phone and the base station to reduce power consumption caused by use of the cellular channel by the application. After the application that has applied for the cellular network is restored from the frozen state to the active state, the mobile phone may release the reclaimed cellular request of the application. In addition, when the cellular network is in the disconnected state, the mobile phone may re-establish the cellular connection to the base station, to ensure that the application that actively applies for the cellular network can continue to use the cellular network.

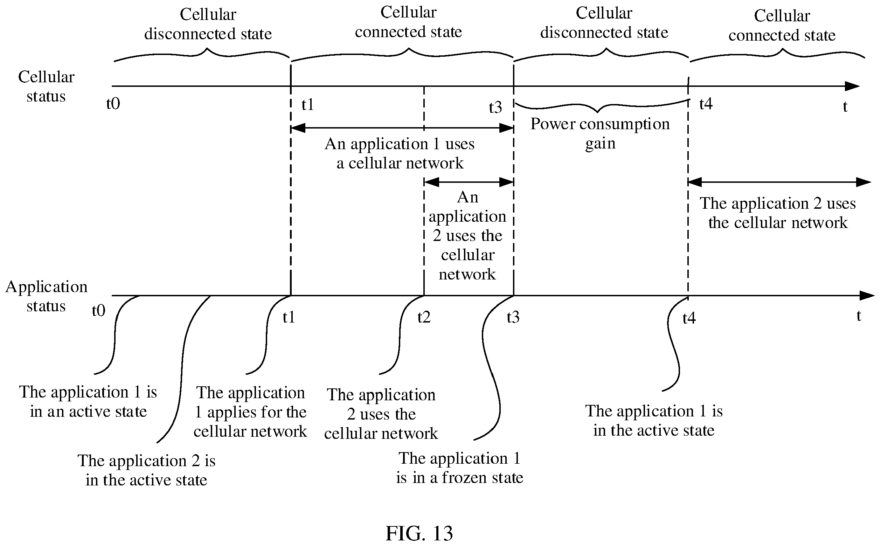

In a possible implementation, the cellular network control method shown in FIG. 6 may be used to perform cellular network control on a mobile phone. FIG. 13 is an example of a schematic diagram of a cellular status and an application status after cellular network control is performed by using the method shown in FIG. 6.

For ease of understanding, FIG. 13 may be compared with FIG. 11. In addition, principles of same or similar parts between FIG. 11 and FIG. 13 are similar. Details are not described in the following. For example, in the implementation in FIG. 13, changes of the application status and the cellular status in a time period from t0 to t3 are the same as those in FIG. 11. Refer to the description of FIG. 11.

It can be learned from FIG. 13 that an application 1 is switched from an active state to a frozen state at the moment t3. For example, the application 1 is switched from running in the foreground to the background, and no longer generates application data. Then, the application 1 is switched from the frozen state to the active state at a moment t4. For example, the application 1 is switched from not generating the application data in the background to generating the application data in the background.

Refer to the flowchart in FIG. 6, and it can be learned that after the application 1 is switched from the frozen state to the active state at the moment t4, the mobile phone may be reconnected, before the moment t4, to a cellular connection that is between the mobile phone and a base station and that is in a disconnected state. For example, a connection service module may indicate a modem to establish the cellular connection to the base station. After the moment t4, the cellular connection between the modem and the base station is re-established. From the moment t4, a cellular status of the mobile phone is a cellular connected state.

Refer to the foregoing descriptions in FIG. 3a, FIG. 3b, and FIG. 4 and it can be learned that an application 2 may listen to, by using the connection service module, whether the modem establishes the cellular connection to the base station. In this case, at the moment t4, after the cellular connection between the modem and the base station is established, the application 2 may continue to use the cellular connection to perform cellular data communication.

In this implementation, from the moment t3 at which the application 1 is switched from the active state to the frozen state to the moment t4 at which the application 1 is switched back from the frozen state to the active state, the connection service module controls to set a cellular channel between the mobile phone and the base station to the disconnected state, so that the mobile phone can generate a power consumption gain in a time period from t3 to t4.

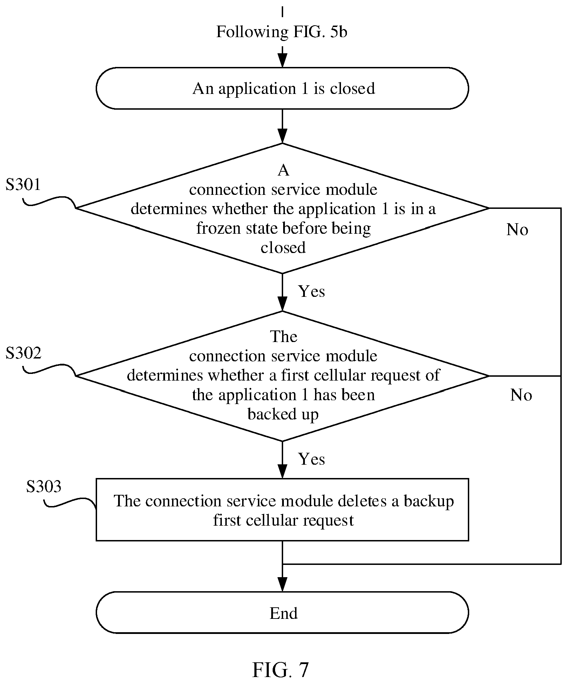

In another embodiment, refer to a schematic flowchart, as shown in FIG. 7, of a cellular network control method according to an embodiment of the present invention. Refer to FIG. 7. After the procedure in FIG. 5b, when an application 1 is closed, a mobile phone may perform the procedure shown in FIG. 7.

That an application is closed (which is also referred to as that the application is in a closed state) indicates that a process of the application is in the closed state. That the application is closed may be triggered by a user, for example, the user performs an active closing operation on a foreground application or a background application to close the application; or triggered by a system, for example, the system automatically closes the process because the process does not respond.

In addition, a state before the application is closed may include an active state or a frozen state.

For example, after detecting that the application 1 is in the closed state, a power consumption control module may notify a connection service module of the status information. The connection service module may obtain status information of the application 1 from the power consumption control module.

When the application 1 is closed, the connection service module may perform S301.

S301: The connection service module determines whether the application 1 is in the frozen state before being closed.

The connection service module may obtain the status information of the application from the power consumption control module in real time. The connection service module determines, based on the status information about the application 1, whether the application 1 is in the frozen state before being in the closed state.

For example, if the application 1 is in the active state before being closed, the connection service module determines that the application 1 is not in the frozen state before being closed. In the method of this application, cellular network control is not performed on an application that is closed after being active. The procedure of the method directly ends.

For example, the application 1 is a browser application. Refer to FIG. 9(2). The browser application runs in the background. If the user performs, by using a finger, a sliding operation on a thumbnail 504 in a direction from a bottom edge of the thumbnail 504 to a top of the mobile phone, the mobile phone may close, in response to the sliding operation, a process that is of the browser application and that corresponds to the thumbnail 504, and the browser application may be switched from the active state to the closed state, that is, the browser application is in the active state before being closed.

For example, if the application 1 is in the frozen state before being closed, S302 is performed.

For example, the application 1 is a browser application. Refer to 10(2). The browser application is currently in the frozen state in the background. If the user performs a sliding operation on a thumbnail 511 in a direction from a bottom edge of the thumbnail 511 of a news interface of the browser application to a top of the mobile phone, the mobile phone may close, in response to the sliding operation, a process that is of the browser application and that corresponds to the thumbnail 511, and the browser application is switched from the frozen state to the closed state, that is, the browser application is in the frozen state before being closed.

S302: The connection service module determines whether a first cellular request of the application 1 has been backed up.

The connection service module may query whether the cellular request of the application 1 exists in a second data structure (where the second data structure may be used to back up a cellular request sent, to the connection service module, by an application that actively applies for a cellular network). If the cellular request of the application 1 exists in the second data structure, it indicates that the connection service module has backed up the first cellular request of the application 1. If the cellular request of the application 1 does not exist in the second data structure, it indicates that the connection service module has not backed up the first cellular request of the application 1.

For example, although the application 1 is switched from the frozen state to the closed state, if the application 1 has not applied for the cellular network before being frozen, for example, if the application 1 is an application that directly uses the cellular network actively applied for by another application, the second data structure of the connection service module does not include the cellular request of the application 1.

Optionally, if the application 1 is not a third-party application, for example, the application 1 is a system application, in an optional implementation, the mobile phone does not perform cellular network control on the application 1 when executing the procedure in FIG. 5b, and the second data structure of the connection service module does not include the first cellular request of the application 1. When the connection service module has not backed up the first cellular request of the application 1, the procedure directly ends.

When the application 1 actively applies for the cellular network before being frozen, the connection service module may back up the first cellular request of the application. When the connection service module has backed up the first cellular request of the application 1, the connection service module turns to perform S303.

Optionally, when the application 1 is the third-party application and has actively applied for the cellular network before being frozen, the connection service module may back up the first cellular request of the application. When the connection service module has backed up the first cellular request of the application 1, the connection service module turns to perform S303.

S303: The connection service module deletes a backup first cellular request.

After an application is closed, data of the application needs to be deleted, and a resource used by the application needs to be released, to ensure that the application can run normally when being in the active state during next startup.

In this embodiment, data that is of the application 1 and that needs to be deleted may include the first cellular request.

In this embodiment, the first cellular request may exist in an original first data structure. The application 1 is in the frozen state before being closed. The mobile phone has performed the procedure in FIG. 5b to delete the first cellular request of the application 1 in the original first data structure. In this case, after the application 1 is switched from the closed state to the active state again, the connection service module does not establish a cellular connection between the mobile phone and a base station based on the first cellular request in the first data structure when the application 1 does not apply for the cellular network.

In this embodiment, the first cellular request may alternatively exist in the second data structure. The application 1 is in the frozen state before being closed. The mobile phone may perform the procedure in FIG. 5b to back up the first cellular request of the application 1 to the second data structure before the application 1 is closed. A sequence number of each cellular request of an application is unique and unchanged. After the application 1 is closed, the connection service module may delete the backup first cellular request that is in the second data structure and that has a sequence number of the application 1, to ensure that the application 1 can normally apply for the cellular network when the application 1 is active again after being closed.

In this embodiment, after the third-party application that actively applies for the cellular network is switched from the frozen state to the closed state, the mobile phone may delete the backup cellular request of the third-party application, and the backup cellular request is a cellular request backed up when the third-party application is switched from the active state to the frozen state. After the application is closed, the mobile phone deletes the data and the resource of the application, to ensure that when the application is active again after being closed, the application can apply for the cellular network again without being affected.

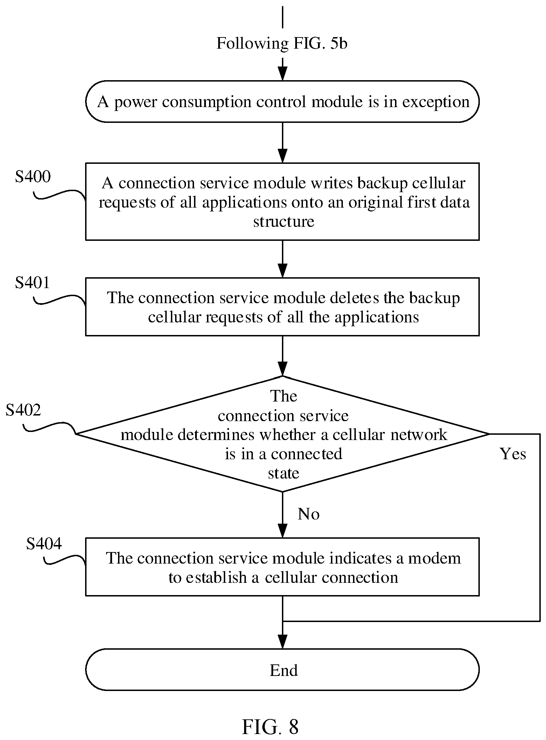

In another embodiment, refer to a schematic flowchart, as shown in FIG. 8, of a cellular network control method according to an embodiment of the present invention. Refer to FIG. 8. After the procedure in FIG. 5b, when a power consumption control module is in exception, a mobile phone may perform the procedure shown in FIG. 8.

That an application is closed (which is also referred to as that the application is in a closed state) indicates that a process of the application is in the closed state. That the application is closed may be triggered by a user, for example, the user performs an active closing operation on a foreground application or a background application to close the application; or triggered by a system, for example, the system automatically closes the process because the process does not respond.

The power consumption control module may perform self-check to determine whether an exception occurs. If the power consumption control module detects, through the self-check, that the power consumption control module is in exception, the power consumption control module is restarted. After restart, the power consumption control module may send, to a connection service module, a notification indicating that the power consumption control module is in exception, and the connection service module may perform S400.

For example, when the self-check of the power consumption control module meets a preset condition, it may be determined that the exception occurs. The preset condition may include but is not limited to at least one of the following:
detection of an illegal function call;
detection of high memory load;
detection of a crash of a process of a power consumption control module; and
detection of manual closing of the process of the power consumption control module.

In the foregoing embodiment, after the power consumption control module is started, the power consumption control module may control the connection service module to perform the steps of the cellular network control method in FIG. 5b, to reduce power consumption of the mobile phone. Therefore, when the exception occurs in the power consumption control module, data that is in the mobile phone and that is operated by the connection service module needs to be restored to a state existing before the connection service module performs an operation. Therefore, after the power consumption control module is in exception, the connection service module may perform S400 to S403.

S400: The connection service module writes backup cellular requests of all applications onto an original first data structure.

For example, when the connection service module queries a second data structure, if it is found that a cellular request of an application exists in the second data structure, it indicates that the application is switched from an active state to a frozen state, and the connection service module performs the procedure in FIG. 5b on the application. Therefore, the cellular request of the application needs to be restored, that is, the cellular request of the application in the second data structure is rewritten to the original first data structure. When cellular requests in the second data structure are related to a plurality of applications, the cellular requests of the plurality of applications need to be restored one by one.

Optionally, in S401, the connection service module deletes the backup cellular requests of all the applications.

The second data structure may be used to back up a cellular request sent, by a third-party application that is switched from the active state to the frozen state, to the connection service module when the third-party application actively applies for a cellular network. When the power consumption control module detects, through the self-check, that the power consumption control module is in exception, backup data generated by performing the cellular network control method by the connection service module under control of the power consumption control module needs to be cleared. In this case, the connection service module may delete a cellular request that is of each application and that is stored in the second data structure.

S402 (Optional): The connection service module determines whether the cellular network is in a connected state.

For a specific implementation of this step, refer to S204 in FIG. 6. Details are not described herein again.

When a cellular status is a cellular connected state, the procedure ends. When the cellular status is a cellular disconnected state, the connection service module turns to perform S403.

Optionally, in S403, the connection service module determines whether a network meets a second preset condition.

For a specific implementation of this step, refer to S205 in FIG. 6. Details are not described herein again.

If the connection service module determines that the network does not meet the second preset condition, the procedure ends.

If the connection service module determines that the network meets the second preset condition, the connection service module performs S404.

S404: The connection service module indicates a modem to establish a cellular connection.

Because the power consumption control module may control the connection service module to perform the procedure in FIG. 5b to disable the cellular connection, after the exception occurs in the power consumption control module, a network further needs to be restored. When the cellular network is not in the connected state, the connection service module indicates the modem to establish the cellular connection to a base station.

For a specific implementation of this step, refer to S206 in FIG. 6. Details are not described herein again.

After S404, the procedure ends.

In this embodiment of this application, after the exception occurs in the power consumption control module, the mobile phone may restore the cellular request of the application and an operation of the cellular network after the application is switched from the active state to the frozen state, which may specifically include: restoring the cellular request of the application to the original first data structure by using the backup cellular request, deleting the backup cellular request, and reestablishing a connection to the cellular network when the cellular network is disabled. In this way, after the exception occurs in the power consumption control module, an operation performed by the cellular request of the application can be restored, and the connected state of the cellular network can be restored, to ensure that an original network environment of a Wi-Fi and cellular dual connection is not affected.

It may be understood that, to implement the foregoing functions, the electronic device includes corresponding hardware and/or software modules for performing the functions. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

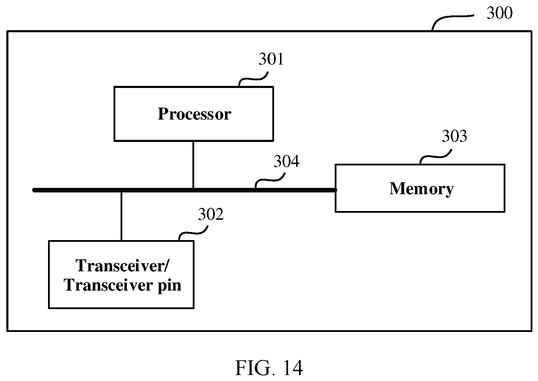

In an example, FIG. 14 is a schematic block diagram of an apparatus 300 according to an embodiment of this application. The apparatus 300 may include a processor 301 and a transceiver/transceiver pin 302, and optionally, further include a memory 303.

Components of the apparatus 300 are coupled together by using a bus 304. In addition to a data bus, the bus 304 further includes a power bus, a control bus, and a status signal bus. However, for clear description, various types of buses in the figure are marked as the bus 304.

Optionally, the memory 303 may be configured to store instructions in the foregoing method embodiments. The processor 301 may be configured to execute the instructions in the memory 303, control a receiving pin to receive a signal, and control a sending pin to send a signal.

The apparatus 300 may be the electronic device or a chip of the electronic device in the foregoing method embodiments.

All related content of each step in the foregoing method embodiments may be cited in function descriptions of a corresponding function module. Details are not described herein again.

This embodiment further provides a computer storage medium. The computer storage medium stores computer instructions. When the computer instructions are run on an electronic device, the electronic device is enabled to perform the foregoing related method steps, to implement a cellular network control method in the foregoing embodiments.

This embodiment further provides a computer program product. When the computer program product is run on a computer, the computer is enabled to perform the foregoing related steps, to implement a cellular network control method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform a cellular network control method in the foregoing method embodiments.

The electronic device, the computer storage medium, the computer program product, or the chip provided in embodiments is configured to perform a corresponding method provided above. Therefore, for beneficial effects that can be achieved by the electronic device, the computer storage medium, the computer program product, or the chip, refer to beneficial effects of the corresponding method provided above. Details are not described herein again.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be indirect couplings or communication connections through some interfaces, apparatuses or units, and may be implemented in electrical, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

Any content of embodiments of this application and any content of a same embodiment may be freely combined. Any combination of the foregoing content shall fall within the scope of this application.

When the integrated unit is implemented in the form of a software function unit and is sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to these specific embodiments. The specific embodiments are merely illustrative rather than restrictive. Inspired by this application, a person of ordinary skill in the art may develop many other manners without departing from the protection scope of the claims, and all such manners fall within the protection scope of this application.

Methods or algorithm steps described in combination with the content disclosed in embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to the processor, so that the processor can read information from the storage medium or write information onto the storage medium. Certainly, the storage medium may be a component of the processor. The processor and the storage medium may be located in an ASIC. In addition, the ASIC may be disposed in a network device. Certainly, the processor and the storage medium may exist in a network device as discrete components.

A person skilled in the art should be aware that in the foregoing one or more examples, the functions described in embodiments of this application may be implemented by hardware, software, firmware, or any combination thereof. When being implemented by software, these functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to these specific embodiments. The specific embodiments are merely illustrative rather than restrictive. Inspired by this application, a person of ordinary skill in the art may develop many other manners without departing from the protection scope of the claims, and all such manners fall within the protection scope of this application.

## Claims

1. A cellular network control method, applied to an electronic device (300), wherein the electronic device (300) performs data exchange with an application server through a Wi-Fi network and a cellular network, the cellular network is applied for by a first application, the first application and a second application respectively perform data exchange with an application server of the first application and an application server of the second application through the cellular network, and the method comprises:
in response to a received first user operation, switching the first application running in the foreground to the background for running;
detecting (S601) that the first application does not generate application data within preset duration of running in the background, and that the first application is a last application that has applied for the cellular network and used the cellular network, and disconnecting a channel of the cellular network of the electronic device (300); and
exchanging data of the second application with the application server of the second application through the Wi-Fi network.

2. The method according to claim 1, wherein after the disconnecting a channel of the cellular network of the electronic device (300), the method further comprises:
in response to a received second user operation, switching, to the foreground for running, the first application that does not generate the application data within the preset duration of running in the background; and
connecting (S701, S902) the channel of the cellular network of the electronic device (300).

3. The method according to claim 1, wherein after the detecting that the first application does not generate application data within preset duration of running in the background, and that the first application is a last application that has applied for the cellular network and used the cellular network, the method further comprises:
deleting (S603) a first cellular request of the first application from a first data structure, wherein
the first cellular request is used to apply for the cellular network, the first data structure is used to store a cellular request of a preset application, and the preset application is an application that has applied for the cellular network.

4. The method according to claim 3, wherein
before the deleting (S603) a first cellular request of the first application from a first data structure, the method further comprises:
backing up (S102) the first cellular request to a second data structure; and
before the connecting the channel of the cellular network of the electronic device (300), the method further comprises:
writing, onto the first data structure, a backup first cellular request in the second data structure.

5. The method according to claim 3, wherein the method further comprises:
in response to a received third user operation, switching the third application running in the foreground to the background for running, wherein the cellular network is applied for by the third application, and the third application performs data exchange with an application server of the third application through the cellular network; and
detecting that the third application does not generate application data within the preset duration of running in the background, and that the third application is not the last application that has applied for the cellular network and used the cellular network, and deleting a second cellular request of the third application from the first data structure, wherein
the second cellular request is used to apply for the cellular network.

6. The method according to claim 5, wherein before the deleting a second cellular request of the third application from the first data structure, the method further comprises:
backing up the second cellular request to a second data structure.

7. The method according to claim 6, wherein after the deleting a second cellular request of the third application from the first data structure, the method further comprises:
in response to a received fourth user operation, switching, to the foreground for running, the third application that does not generate the application data within the preset duration of running in the background; and
writing, onto the first data structure, a backup second cellular request in the second data structure.

8. The method according to claim 4 or 7, wherein after a target cellular request backed up in the second data structure is written onto the first data structure, the method further comprises:
deleting the target cellular request from the second data structure, wherein
the target cellular request comprises the first cellular request or the second cellular request.

9. The method according to claim 4, wherein after the disconnecting a channel of the cellular network of the electronic device (300), the method further comprises:
in response to a received fourth user operation, closing the first application that does not generate the application data within the preset duration of running in the background; and
deleting the first cellular request from the second data structure.

10. The method according to claim 2, wherein the electronic device (300) displays a first icon indicating the Wi-Fi network and a second icon indicating the cellular network;
before the disconnecting a channel of the cellular network of the electronic device (300), the second icon comprises a second uplink identifier and/or a second downlink identifier;
the second uplink identifier indicates that the electronic device (300) uploads data to the application server through the cellular network; and
the second downlink identifier indicates that the electronic device (300) downloads data from the application server through the cellular network.

11. The method according to claim 10, wherein
after the disconnecting a channel of the cellular network of the electronic device (300), the first icon comprises the first uplink identifier and/or the first downlink identifier, and the second icon does not comprise the second uplink identifier and the second downlink identifier;
the first uplink identifier indicates that the electronic device (300) uploads data to the application server through the Wi-Fi network; and
the first downlink identifier indicates that the electronic device (300) downloads data from the application server through the Wi-Fi network.

12. The method according to claim 10, wherein after the connecting the channel of the cellular network of the electronic device (300), the second icon comprises the second uplink identifier and/or the second downlink identifier.

13. An electronic device (300), comprising a memory (303) and a processor (301), wherein the memory (303) is coupled to the processor (301), the memory (303) stores program instructions, and when the program instructions are executed by the processor (301), the electronic device (300) is enabled to perform the cellular network control method according to any one of claims 1 to 12.

14. A computer-readable storage medium, comprising a computer program, wherein when the computer program is run on an electronic device (300), the electronic device (300) is enabled to perform the cellular network control method according to any one of claims 1 to 12.

15. A chip, comprising one or more interface circuits and one or more processors, wherein the interface circuit is configured to receive a signal from a memory of an electronic device (300), and send the signal to the processor; the signal comprises computer instructions stored in the memory; and when the processor executes the computer instructions, the electronic device is enabled to perform the cellular network control method according to any one of claims 1 to 12.

## Patentansprüche

1. Zellulares Netzwerksteuerungsverfahren, das auf ein elektronisches Gerät (300) angewendet wird, wobei das elektronische Gerät (300) über ein Wi-Fi-Netzwerk und ein zellulares Netzwerk einen Datenaustausch mit einem Anwendungsserver durchführt, das zellulare Netzwerk von einer ersten Anwendung angemeldet wird, die erste Anwendung und eine zweite Anwendung jeweils über das zellulare Netzwerk einen Datenaustausch mit einem Anwendungsserver der ersten Anwendung und einem Anwendungsserver der zweiten Anwendung durchführen, und das Verfahren umfasst:
als Reaktion auf eine empfangene erste Benutzeroperation, Umschalten der ersten im Vordergrund laufenden Anwendung in den Hintergrund, um sie dort laufen zu lassen;
Erkennen (S601), dass die erste Anwendung innerhalb einer voreingestellten Dauer des Laufens im Hintergrund keine Anwendungsdaten erzeugt und dass die erste Anwendung eine letzte Anwendung ist, die sich für das zellulare Netzwerk angemeldet und das zellulare Netzwerk genutzt hat, und Trennen eines Kanals des zellularen Netzwerks des elektronischen Geräts (300); und
Austauschen von Daten der zweiten Anwendung mit dem Anwendungsserver der zweiten Anwendung über das Wi-Fi-Netzwerk.

2. Verfahren nach Anspruch 1, wobei das Verfahren nach dem Trennen eines Kanals des zellularen Netzwerks des elektronischen Geräts (300) ferner umfasst:
als Reaktion auf eine empfangene zweite Benutzeroperation, Umschalten der ersten Anwendung, die die Anwendungsdaten nicht innerhalb der voreingestellten Dauer der Ausführung im Hintergrund erzeugt, in den Vordergrund zur Ausführung; und
Verbinden (S701, S902) des Kanals des zellularen Netzwerks des elektronischen Geräts (300).

3. Verfahren nach Anspruch 1, wobei nach dem Erkennen, dass die erste Anwendung innerhalb einer voreingestellten Dauer des Laufens im Hintergrund keine Anwendungsdaten erzeugt und dass die erste Anwendung eine letzte Anwendung ist, die sich für das zellulare Netzwerk angemeldet und das zellulare Netzwerk genutzt hat, das Verfahren ferner umfasst:
Löschen (S603) einer ersten zellularen Anforderung der ersten Anwendung aus einer ersten Datenstruktur, wobei
die erste zellulare Anforderung verwendet wird, um sich für das zellulare Netzwerk anzumelden, die erste Datenstruktur verwendet wird, um eine zellulare Anforderung einer voreingestellten Anwendung zu speichern, und die voreingestellte Anwendung eine Anwendung ist, die sich für das zellulare Netzwerk angemeldet hat.

4. Verfahren nach Anspruch 3, wobei
vor dem Löschen (S603) einer ersten zellularen Anforderung der ersten Anwendung aus einer ersten Datenstruktur das Verfahren ferner umfasst:
Sichern (S102) der ersten zellularen Anforderung in einer zweiten Datenstruktur; und
vor dem Verbinden des Kanals des zellularen Netzwerks des elektronischen Geräts (300) das Verfahren ferner umfasst:
Schreiben einer ersten zellularen Sicherungsanforderung in der zweiten Datenstruktur in die erste Datenstruktur.

5. Verfahren nach Anspruch 3, wobei das Verfahren ferner umfasst:
als Reaktion auf eine empfangene dritte Benutzeroperation, Umschalten der im Vordergrund laufenden dritten Anwendung in den Hintergrund, um sie dort laufen zu lassen, wobei das zellulare Netzwerk von der dritten Anwendung angemeldet wird und die dritte Anwendung einen Datenaustausch mit einem Anwendungsserver der dritten Anwendung über das zellulare Netzwerk durchführt; und
Erkennen, dass die dritte Anwendung innerhalb der voreingestellten Dauer der Ausführung im Hintergrund keine Anwendungsdaten erzeugt und dass die dritte Anwendung nicht die letzte Anwendung ist, die sich für das zellulare Netzwerk angemeldet und das zellulare Netzwerk verwendet hat, und Löschen einer zweiten Zellularanforderung der dritten Anwendung aus der ersten Datenstruktur, wobei
die zweite zellulare Anforderung verwendet wird, um das zellulare Netzwerk anzumelden.

6. Verfahren nach Anspruch 5, wobei das Verfahren vor dem Löschen einer zweiten zellularen Anforderung der dritten Anwendung aus der ersten Datenstruktur ferner umfasst:
Sichern der zweiten zellularen Anforderung in einer zweiten Datenstruktur.

7. Verfahren nach Anspruch 6, wobei das Verfahren nach dem Löschen einer zweiten zellularen Anforderung der dritten Anwendung aus der ersten Datenstruktur ferner umfasst:
als Reaktion auf eine empfangene vierte Benutzeroperation, Umschalten der dritten Anwendung, die die Anwendungsdaten nicht innerhalb der voreingestellten Dauer der Ausführung im Hintergrund erzeugt, in den Vordergrund zur Ausführung; und
Schreiben einer zweiten zellularen Sicherungsanforderung in die zweite Datenstruktur in die erste Datenstruktur.

8. Verfahren nach Anspruch 4 oder 7, wobei, nachdem eine in der zweiten Datenstruktur gesicherte zellulare Zielanforderung in die erste Datenstruktur geschrieben wurde, das Verfahren ferner umfasst:
Löschen der zellularen Zielanforderung aus der zweiten Datenstruktur, wobei die zellulare Zielanforderung die erste zellulare Anforderung oder die zweite zellulare Anforderung umfasst.

9. Verfahren nach Anspruch 4, wobei das Verfahren nach dem Trennen eines Kanals des zellularen Netzwerks des elektronischen Geräts (300) ferner umfasst:
als Reaktion auf eine empfangene vierte Benutzeroperation, Schließen der ersten Anwendung, die die Anwendungsdaten nicht innerhalb der voreingestellten Dauer der Ausführung im Hintergrund erzeugt; und
Löschen der ersten zellularen Anforderung aus der zweiten Datenstruktur.

10. Verfahren nach Anspruch 2, wobei das elektronische Gerät (300) ein erstes Symbol anzeigt, das das Wi-Fi-Netzwerk angibt, und ein zweites Symbol, das das zellulare Netzwerk angibt;
vor dem Trennen eines Kanals des zellularen Netzwerks des elektronischen Geräts (300) umfasst das zweite Symbol einen zweiten Uplink-Identifikator und/oder einen zweiten Downlink-Identifikator;
der zweite Uplink-Identifikator angibt, dass das elektronische Gerät (300) Daten über das zellulare Netzwerk an den Anwendungsserver hochlädt; und
der zweite Downlink-Identifikator angibt, dass das elektronische Gerät (300) Daten über das zellulare Netzwerk von dem Anwendungsserver herunterlädt.

11. Verfahren nach Anspruch 10, wobei
nach dem Trennen eines Kanals des zellularen Netzwerks des elektronischen Geräts (300), umfasst das erste Symbol den ersten Uplink-Identifikator und/oder den ersten Downlink-Identifikator, und das zweite Symbol umfasst nicht den zweiten Uplink-Identifikator und den zweiten Downlink-Identifikator;
der erste Uplink-Identifikator angibt, dass das elektronische Gerät (300) Daten über das Wi-Fi-Netzwerk an den Anwendungsserver hochlädt; und
der erste Downlink-Identifikator angibt, dass das elektronische Gerät (300) Daten über das Wi-Fi-Netzwerk von dem Anwendungsserver herunterlädt.

12. Verfahren nach Anspruch 10, wobei nach dem Verbinden des Kanals des zellularen Netzwerks des elektronischen Geräts (300) das zweite Symbol den zweiten Uplink-Identifikator und/oder den zweiten Downlink-Identifikator umfasst.

13. Elektronisches Gerät (300), umfassend einen Speicher (303) und einen Prozessor (301), wobei der Speicher (303) mit dem Prozessor (301) gekoppelt ist, der Speicher (303) Programmanweisungen speichert und, wenn die Programmanweisungen vom Prozessor (301) ausgeführt werden, das elektronische Gerät (300) in die Lage versetzt wird, das Steuerungsverfahren für das zellulare Netzwerk gemäß einem der Ansprüche 1 bis 12 durchzuführen.

14. Computerlesbares Speichermedium, das ein Computerprogramm umfasst, wobei, wenn das Computerprogramm auf einem elektronischen Gerät (300) ausgeführt wird, das elektronische Gerät (300) in die Lage versetzt wird, das zellulare Netzwerksteuerungsverfahren nach einem der Ansprüche 1 bis 12 durchzuführen.

15. Chip, umfassend eine oder mehrere Schnittstellenschaltungen und einen oder mehrere Prozessoren, wobei die Schnittstellenschaltung dazu konfiguriert ist, ein Signal von einem Speicher eines elektronischen Geräts (300) zu empfangen und das Signal an den Prozessor zu senden; wobei das Signal in dem Speicher gespeicherte Computeranweisungen umfasst; und wobei, wenn der Prozessor die Computeranweisungen ausführt, das elektronische Gerät in die Lage versetzt wird, das zellulare Netzwerksteuerungsverfahren nach einem der Ansprüche 1 bis 12 durchzuführen.

## Revendications

1. Procédé de contrôle de réseau cellulaire, appliqué à un dispositif électronique (300), dans lequel le dispositif électronique (300) effectue un échange de données avec un serveur d'applications par l'intermédiaire d'un réseau Wi-Fi et d'un réseau cellulaire, le réseau cellulaire est utilisé par une première application, la première application et une deuxième application effectuent respectivement un échange de données avec un serveur d'applications de la première application et un serveur d'applications de la deuxième application par l'intermédiaire du réseau cellulaire, et le procédé comprend les étapes suivantes :
en réponse à une première opération utilisateur reçue, faire passer la première application s'exécutant au premier plan à l'arrière-plan pour exécution ;
détecter (S601) que la première application ne génère pas de données d'application pendant une durée prédéfinie d'exécution en arrière-plan, et que la première application est la dernière application qui a demandé accès au réseau cellulaire et utilisé le réseau cellulaire, et déconnecter un canal du réseau cellulaire du dispositif électronique (300) ; et
échanger des données de la deuxième application avec le serveur d'applications de la deuxième application par l'intermédiaire du réseau Wi-Fi.

2. Procédé selon la revendication 1, dans lequel, après la déconnexion d'un canal du réseau cellulaire du dispositif électronique (300), le procédé comprend en outre les étapes suivantes :
en réponse à une deuxième opération utilisateur reçue, faire passer au premier plan pour exécution la première application qui ne génère pas les données d'application pendant la durée prédéfinie d'exécution en arrière-plan ; et
connecter (S701, S902) le canal du réseau cellulaire du dispositif électronique (300).

3. Procédé selon la revendication 1, dans lequel, après avoir détecté que la première application ne génère pas de données d'application pendant la durée prédéfinie d'exécution en arrière-plan, et que la première application est la dernière application qui a demandé accès au réseau cellulaire et utilisé le réseau cellulaire, le procédé comprend en outre les étapes suivantes :
supprimer (S603) une première demande cellulaire de la première application d'une première structure de données, où
la première demande cellulaire est utilisée pour demander accès au réseau cellulaire, la première structure de données est utilisée pour stocker une demande cellulaire d'une application prédéfinie, et l'application prédéfinie est une application qui a demandé accès au réseau cellulaire.

4. Procédé selon la revendication 3, dans lequel
avant de supprimer (S603) une première demande cellulaire de la première application d'une première structure de données, le procédé comprend en outre l'étape suivante :
sauvegarder (S102) la première demande cellulaire dans une deuxième structure de données ; et
avant de connecter le canal du réseau cellulaire du dispositif électronique (300), le procédé comprend en outre l'étape suivante :
écrire, sur la première structure de données, une première demande cellulaire de sauvegarde dans la deuxième structure de données.

5. Procédé selon la revendication 3, dans lequel le procédé comprend en outre les étapes suivantes :
en réponse à une troisième opération utilisateur reçue, faire passer la troisième application s'exécutant au premier plan à l'arrière-plan pour exécution, la troisième application faisant une demande d'accès au réseau cellulaire, et la troisième application effectuant un échange de données avec un serveur d'applications de la troisième application par l'intermédiaire du réseau cellulaire ; et
détecter que la troisième application ne génère pas de données d'application pendant la durée prédéfinie d'exécution en arrière-plan, et que la troisième application n'est pas la dernière application à avoir demandé accès au réseau cellulaire et à avoir utilisé le réseau cellulaire, et supprimer une deuxième demande cellulaire de la troisième application de la première structure de données, où
la deuxième demande cellulaire est utilisée pour demander accès au réseau cellulaire.

6. Procédé selon la revendication 5, dans lequel, avant de supprimer une deuxième demande cellulaire de la troisième application de la première structure de données, le procédé comprend en outre l'étape suivante :
sauvegarder la deuxième demande cellulaire dans une deuxième structure de données.

7. Procédé selon la revendication 6, dans lequel, après la suppression d'une deuxième demande cellulaire de la troisième application de la première structure de données, le procédé comprend en outre les étapes suivantes :
en réponse à une quatrième opération utilisateur reçue, faire passer au premier plan pour exécution la troisième application qui ne génère pas les données d'application pendant la durée prédéfinie d'exécution en arrière-plan ; et
écrire, sur la première structure de données, une deuxième demande cellulaire de sauvegarde dans la deuxième structure de données.

8. Procédé selon la revendication 4 ou la revendication 7, dans lequel, après qu'une demande cellulaire cible sauvegardée dans la deuxième structure de données a été écrite dans la première structure de données, le procédé comprend en outre l'étape suivante :
supprimer la demande cellulaire cible de la deuxième structure de données, où
la demande cellulaire cible comprend la première demande cellulaire ou la deuxième demande cellulaire.

9. Procédé selon la revendication 4, dans lequel, après la déconnexion d'un canal du réseau cellulaire du dispositif électronique (300), le procédé comprend en outre les étapes suivantes :
en réponse à une quatrième opération utilisateur reçue, fermer la première application qui ne génère pas les données d'application pendant la durée prédéfinie d'exécution en arrière-plan ; et
supprimer la première demande cellulaire de la deuxième structure de données.

10. Procédé selon la revendication 2, dans lequel le dispositif électronique (300) affiche une première icône indiquant le réseau Wi-Fi et une deuxième icône indiquant le réseau cellulaire ;
avant la déconnexion d'un canal du réseau cellulaire du dispositif électronique (300), la deuxième icône comprend un deuxième identifiant de liaison montante et/ou un deuxième identifiant de liaison descendante ;
le deuxième identifiant de liaison montante indique que le dispositif électronique (300) télécharge des données vers le serveur d'applications par l'intermédiaire du réseau cellulaire ; et
le deuxième identifiant de liaison descendante indique que le dispositif électronique (300) télécharge des données depuis le serveur d'applications par l'intermédiaire du réseau cellulaire.

11. Procédé selon la revendication 10, dans lequel
après la déconnexion d'un canal du réseau cellulaire du dispositif électronique (300), la première icône comprend le premier identifiant de liaison montante et/ou le premier identifiant de liaison descendante, et la deuxième icône ne comprend pas le deuxième identifiant de liaison montante ni le deuxième identifiant de liaison descendante ;
le premier identifiant de liaison montante indique que le dispositif électronique (300) télécharge des données vers le serveur d'applications par l'intermédiaire du réseau Wi-Fi ; et
le premier identifiant de liaison descendante indique que le dispositif électronique (300) télécharge des données depuis le serveur d'applications par l'intermédiaire du réseau Wi-Fi.

12. Procédé selon la revendication 10, dans lequel, après la connexion du canal du réseau cellulaire du dispositif électronique (300), la deuxième icône comprend le deuxième identifiant de liaison montante et/ou le deuxième identifiant de liaison descendante.

13. Dispositif électronique (300), comprenant une mémoire (303) et un processeur (301), dans lequel la mémoire (303) est couplée au processeur (301), la mémoire (303) stocke des instructions de programme et, lorsque les instructions de programme sont exécutées par le processeur (301), le dispositif électronique (300) est activé pour exécuter le procédé de contrôle de réseau cellulaire selon l'une quelconque des revendications 1 à 12.

14. Support de stockage lisible par ordinateur, comprenant un programme informatique où, lorsque le programme informatique est exécuté sur un dispositif électronique (300), le dispositif électronique (300) est activé pour exécuter le procédé de contrôle de réseau cellulaire selon l'une quelconque des revendications 1 à 12.

15. Puce comprenant un ou plusieurs circuits d'interface et un ou plusieurs processeurs, où le circuit d'interface est configuré pour recevoir un signal provenant d'une mémoire d'un dispositif électronique (300) et envoyer le signal au processeur ; le signal comprenant des instructions informatiques stockées dans la mémoire ; et, lorsque le processeur exécute les instructions informatiques, le dispositif électronique est activé pour exécuter le procédé de contrôle de réseau cellulaire selon l'une quelconque des revendications 1 à 12.
